# EUROPÄISCHE PATENTSCHRIFT

(11) **EP 4 095 070 B1**
(45) Veröffentlichungstag und Bekanntmachung des Hinweises auf die Patenterteilung: **04.12.2024**
(21) Anmeldenummer: 22174912.0
(22) Anmeldetag: 23.05.2022
(51) Int. Cl.: B65G 15/24, B65G 47/64

(54) **FÖRDERVORRICHTUNG ZU EINEM FÖRDERN VON PRODUKTEN, INSBESONDERE VON VERPACKTEN UND/ODER UNVERPACKTEN LEBENSMITTELN, SOWIE PRODUKTIONSANLAGE UND VERFAHREN MIT EINER DERARTIGEN FÖRDERVORRICHTUNG ZU EINEM FÖRDERN VON PRODUKTEN**
CONVEYING DEVICE FOR CONVEYING PRODUCTS, IN PARTICULAR PACKAGED AND UNPACKED FOODSTUFFS, AND PRODUCTION PLANT AND METHOD WITH SUCH A CONVEYING DEVICE FOR CONVEYING PRODUCTS
DISPOSITIF DE TRANSPORT PERMETTANT DE TRANSPORTER DES PRODUITS, EN PARTICULIER DES DENRÉES ALIMENTAIRES EMBALLÉES ET/OU NON EMBALLÉES, AINSI QU'INSTALLATION DE PRODUCTION ET PROCÉDÉ COMPORTANT UN TEL DISPOSITIF DE TRANSPORT PERMETTANT DE TRANSPORTER DES PRODUITS

(30) Priorität: 28.05.2021 DE 102021113902
(43) Veröffentlichungstag der Anmeldung: 30.11.2022
(73) Patentinhaber: Syntegon Packaging Systems AG, 8222 Beringen (CH)
(72) Erfinder: Bänteli, Linus, 8222 Beringen (CH)
(74) Vertreter: Novagraaf Group

(56) Entgegenhaltungen:
- WO-A1-2014/178784
- US-A- 4 821 870
- US-A- 5 078 255

## Beschreibung

### Stand der Technik

Aus EP 1 012 086 B1, EP 2 019 803 B1 und US 5 078 255 A sind bereits Fördervorrichtungen zu einem Fördern von Produkten bekannt, wobei die bekannten Fördervorrichtungen zumindest eine Transporteinheit, die zumindest ein endloses Transportelement umfasst, das eine Produktauflagefläche zu einer Aufnahme von zu fördernden Produkten aufweist, zumindest eine Führungseinheit zu einer Führung des Transportelements, die zumindest ein Führungselement aufweist, und zumindest eine Lagereinheit zu einer schwenkbaren oder kippbaren Lagerung der Führungseinheit zusammen mit der Transporteinheit relativ zu einer Rahmeneinheit einer Produktionsanlage umfassen.

Ferner sind aus WO 2014/178784 A1 und US 4 821 870 A bereits Produktionsanlagen mit zumindest einer Fördervorrichtung, mit zumindest einer Rahmeneinheit, zu der zumindest eine Führungseinheit der Fördervorrichtung zusammen mit einer Transporteinheit der Fördervorrichtung mittels einer Lagereinheit der Fördervorrichtung schwenkbar oder kippbar gelagert ist, bekannt.

### Offenbarung der Erfindung

Die Erfindung geht aus von einer Produktionsanlage mit zumindest einer Fördervorrichtung, mit zumindest einer Rahmeneinheit, zu der zumindest eine Führungseinheit der Fördervorrichtung zusammen mit einer Transporteinheit der Fördervorrichtung mittels einer Lagereinheit der Fördervorrichtung schwenkbar oder kippbar gelagert ist, und mit zumindest einer weiteren Führungseinheit, wobei die Fördervorrichtung zu einem Fördern von Produkten, insbesondere von verpackten und/oder unverpackten Lebensmitteln, zumindest die Transporteinheit, die zumindest ein endloses Transportelement, insbesondere ein endloses Förderband, umfasst, das eine Produktauflagefläche zu einer Aufnahme von zu fördernden Produkten aufweist, zumindest die Führungseinheit zu einer Führung des Transportelements, die zumindest ein, insbesondere beweglich gelagertes, Führungselement, insbesondere eine Führungsrolle, zu einer Umlenkung des endlosen Transportelements aufweist, und zumindest die Lagereinheit zu einer schwenkbaren oder kippbaren Lagerung der Führungseinheit zusammen mit der Transport-
einheit relativ zur Rahmeneinheit um eine zumindest im Wesentlichen parallel zur Produktauflagefläche verlaufende Bewegungsachse der Führungseinheit, umfasst.

Es wird vorgeschlagen, dass die Führungseinheit zumindest ein weiteres Führungselement zu einer Umlenkung eines endlosen weiteren Transportelements der Produktionsanlage, insbesondere eines endlosen weiteren Förderbands der Produktionsanlage, aufweist, wobei zumindest ein Umlenkbereich des weiteren Transportelements an der Führungseinheit angeordnet ist, wobei ein weiterer Bereich des weiteren Transportelements an der weiteren Führungseinheit gelagert ist, wobei das weitere Führungselement mittels der Lagereinheit zusammen mit dem Führungselement und mit der Transporteinheit relativ zur Rahmeneinheit schwenkbar oder kippbar gelagert ist, während der weitere Bereich des endlosen weiteren Transportelements ungeschwenkt oder ungekippt verbleibt. Bevorzugt ist das weitere Führungselement beabstandet relativ zum Transportelement und zum Führungselement an der Führungseinheit angeordnet. Vorzugsweise ist das weitere Führungselement kontaktlos zum Transportelement an der Führungseinheit angeordnet. Das weitere Führungselement ist insbesondere frei von einem direkten Kontakt zum Transportelement. Es ist denkbar, dass die Führungseinheit eine Vielzahl an Führungselementen und/oder eine Vielzahl an weiteren Führungselementen aufweist, die gleichmäßig über eine maximale Breite der Führungseinheit verteilt angeordnet sein können. Beispielsweise kann eine Vielzahl an Führungselementen gleichmäßig über eine maximale Breite der Führungseinheit verteilt angeordnet sein und/oder es kann eine Vielzahl an weiteren Führungselementen gleichmäßig über eine maximale Breite der Führungseinheit verteilt angeordnet sein. Beispielsweise ist eine Vielzahl an Führungselementen entlang einer quer, insbesondere zumindest im Wesentlichen senkrecht, zu einer Haupttransportrichtung der Transporteinheit verlaufenden Richtung in Reihe angeordnet. Beispielsweise ist eine Vielzahl an weiteren Führungselementen entlang der quer, insbesondere zumindest im Wesentlichen senkrecht, zur Haupttransportrichtung der Transporteinheit verlaufenden Richtung in Reihe angeordnet. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90°
einschließen und der Winkel eine maximale Abweichung von insbesondere kleiner als 8°, vorteilhaft kleiner als 5° und besonders vorteilhaft kleiner als 2° aufweist. Die zumindest im Wesentlichen senkrecht zur Haupttransportrichtung der Transporteinheit verlaufende Richtung verläuft vorzugsweise zumindest im Wesentlichen parallel zur Produktauflagefläche und/oder zur Be-
wegungsachse. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Denkbar ist auch, dass die Führungseinheit ein einzelnes Führungselement und/oder ein einzelnes weiteres Führungselement aufweist, das/die sich, insbesondere entlang der zumindest im Wesentlichen senkrecht zur Haupttransportrichtung verlaufenden Richtung, zumindest im Wesentlichen vollständig über die maximale Breite der Führungseinheit erstrecken/erstreckt. Das Führungselement und/oder das weitere Führungselement sind/ist vorzugsweise als Umlenkrolle/n, als Führungsrolle/n o. dgl. ausgebildet. Bevorzugt sind/ist das Führungselement und/oder das weitere Führungselement beweglich, insbesondere drehbar, gelagert.

Bevorzugt weist die Führungseinheit zumindest zwei Seitenteile auf, zwischen denen das/die Führungselement/e und/oder das/die weitere/n Führungselement/e angeordnet sind. Vorzugsweise sind das/die Führungselement/e und/oder das/die weitere/n Führungselement/e, insbesondere direkt, an den Seitenteilen angeordnet, insbesondere daran drehbar gelagert. Die Seitenteile der Führungseinheit sind bevorzugt mittels der Lagereinheit relativ zur Rahmeneinheit schwenkbar oder kippbar gelagert. Bevorzugt sind die Seitenteile zu einer Anordnung und/oder Lagerung von Bauteilen der Führungseinheit vorgesehen. Die Seitenteile sind insbesondere als Blechteile ausgebildet, die die Führungseinheit seitlich begrenzen. Unter "vorgesehen" soll insbesondere speziell ausgelegt, speziell eingerichtet und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Das Transportelement ist bevorzugt als endloses Förderband ausgebildet. Vorzugsweise ist das Transportelement umlaufend antreibbar an der Führungseinheit angeordnet. Die Führungseinheit ist bevorzugt zu einer beweglichen Lagerung des Transportelements vorgesehen. Das Transportelement ist vorzugsweise als in die Fördervorrichtung integriertes Förderband ausgebildet, das separat zu weiteren Förderbändern einer Haupttransporteinheit einer die Fördervorrichtung umfassenden Produktionsanlage ausgebildet ist. Das weitere Transportelement ist vorzugsweise Teil der Haupttransporteinheit der die Fördervorrichtung umfassenden Produktionsanlage. Das weitere Transportelement ist insbesondere als endloses Förderband ausgebildet. Vorzugsweise ist das weitere Transportelement umlaufend antreibbar. Bevorzugt ist zumindest ein Umlenkbereich des weiteren Transportelements an der Führungseinheit angeordnet. Der Umlenkbereich des weiteren Transportelements wird vorzugsweise durch einen Bereich des weiteren Transportelements gebildet, in dem das weitere Transportelement derart mittels des weiteren Führungselements umlenkbar ist, dass das weitere Transportelement um einen Winkel von mehr als 90° umlenkbar ist, insbesondere umgelenkt wird, und vorzugsweise eine Richtungsänderung in Bezug auf die Haupttransportrichtung erfährt, insbesondere nach einem Umlenken entgegen der Haupttransportrichtung bewegt wird. Ein weiterer Bereich des weiteren Transportelements ist an einer weiteren Führungseinheit der die Fördervorrichtung umfassenden Produktionsanlage angeordnet, insbesondere gelagert. Der Umlenkbereich des weiteren Transportelements ist vorzugsweise zusammen mit der Führungseinheit und der Transporteinheit mittels der Lagereinheit relativ zur Rahmeneinheit schwenkbar oder kippbar gelagert, während der weitere Bereich des weiteren Transportelements ungeschwenkt oder ungekippt verbleibt. Der weitere Bereich des weiteren Transportelements bildet vorzugsweise einen Großteil des weiteren Transportelements aus, insbesondere mehr als 50 %, vorzugsweise mehr als 70 % und besonders bevorzugt mehr als 80 % einer maximalen Längserstreckung des weiteren Transportelements in einem an der weiteren Führungseinheit angeordneten Zustand des weiteren Transportelements. Die Führungseinheit der Fördervorrichtung ist vorzugsweise zusammen mit der Transporteinheit der Fördervorrichtung mittels der Lagereinheit relativ zur weiteren Führungseinheit der Produktionsanlage schwenkbar oder kippbar gelagert, insbesondere um die zumindest im Wesentlichen parallel zur Produktauflagefläche verlaufende Bewegungsachse der Führungseinheit.

Die Bewegungsachse der Führungseinheit wird vorzugsweise durch eine, insbesondere physische, Lagerachse, einen Lagerbolzen, eine Lagerwelle, eine Lagerbuchse o. dgl. der Lagereinheit definiert. Insbesondere ist die Lagerachse, der Lagerbolzen, die Lagerwelle, die Lagerbuchse o. dgl. an den Seitenteilen der Führungseinheit angeordnet, insbesondere daran befestigt. Die Lagereinheit wirkt vorzugsweise mit einem an der weiteren Führungseinheit der Produktionsanlage angeordneten, insbesondere daran befestigten, Gegenstück der Produktionsanlage zusammen, das korrespondierend zu der Lagerachse, dem Lagerbolzen, der Lagerwelle, der Lagerbuchse o. dgl. ausgebildet ist, insbesondere um eine bewegliche Lagerung der Fördervorrichtung an der weiteren Führungseinheit der Produktionsanlage zu realisieren. Die Bewegungsachse der Führungseinheit ist vorzugsweise an einem Ende der Führungseinheit, insbesondere der Seitenteile, angeordnet, das einem weiteren Ende der Führungseinheit, insbesondere der Seitenteile, abgewandt ist, an dem das Transportelement an einem dem weiteren Transportelement abgewandten Endbereich umgelenkt wird. Die Bewegungsachse der Führungseinheit verläuft vorzugsweise zumindest im Wesentlichen parallel zur Produktauflagefläche.

Die Produktauflagefläche ist vorzugsweise eine Fläche des Transportelements, die sich, insbesondere durchgehend eben, zwischen zwei Umlenkbereichen des Transportelements erstreckt. Vorzugsweise ist die Produktauflagefläche an einer der Führungseinheit abgewandten Seite des Transportelements angeordnet. Bevorzugt bildet die Produktauflagefläche eine Oberseite des Transportelements, insbesondere einen Teil einer Oberseite der Fördervorrichtung. Ein Neigungswinkel, den die Produktauflagefläche mit einer Horizontalebene einschließt, ist vorteilhaft infolge einer schwenkbaren oder kippbaren Lagerung der Führungseinheit zusammen mit der Transporteinheit mittels der Lagereinheit variierbar. Bevorzugt ist der Neigungswinkel von 0 °, insbesondere von einer horizontalen Ausrichtung der Produktauflagefläche, bis zu insbesondere maximal 60 °, bevorzugt maximal 45 ° und ganz bevorzugt maximal 20 °, variierbar.

Durch die erfindungsgemäße Ausgestaltung kann vorteilhaft eine kompakte Weiche im Bereich der Fördertechnik, insbesondere des Produkthandlings, erreicht werden, insbesondere zu einer Übergabe oder zu einer Aufnahme von Produkten an oder von vertikal in unterschiedlichen Ebenen angeordneten Pufferspeichern und/oder Austragsförderbändern. Es kann vorteilhaft eine Weiche mit einer geringen maximalen Gesamtlängserstreckung realisiert werden. Es kann vorteilhaft eine geringe Belastung des Transportelements während einer Schwenk- oder Kippbewegung ermöglicht werden, insbesondere da das gesamte Transportelement zusammen mit der dem Transportelement zugeordneten Führungseinheit schwenkbar oder kippbar ist. Infolge der teilweisen Mitbewegung des weiteren Transportelements, insbesondere des Umlenkbereichs des weiteren Transportelements, kann vorteilhaft ein produktschonender Übergang zwischen dem Transportelement und dem weiteren Transportelement realisiert werden. Es kann vorteilhaft in kurzer Zeit eine Aufnahme von Produkten aus einem Pufferspeicher erfolgen und eine daran anschließende Übergabe der Produkte an ein Auftragsförderband erfolgen, insbesondere da durch die kompakte Ausgestaltung der Fördervorrichtung schnelle Schwenk- oder Kippbewegungen realisierbar sind.

Des Weiteren wird vorgeschlagen, dass eine zumindest im Wesentlichen parallel zu einer, insbesondere der bereits zuvor genannten, Haupttransportrichtung der Transporteinheit verlaufende, insbesondere entlang einer zumindest im Wesentlichen parallel zur Produktauflagefläche verlaufenden Richtung sich erstreckende, maximale Längserstreckung eines Transportabschnitts des Transportelements, der mittels der Lagereinheit schwenkbar oder kippbar ist, kleiner ist als 750 mm. Die maximale Längserstreckung des Transportabschnitts des Transportelements ist insbesondere kleiner als 700 mm, bevorzugt kleiner als 600 mm und besonders bevorzugt kleiner als 500 mm. Ganz besonders bevorzugt weist die maximale Längserstreckung des Transportabschnitts des Transportelements einen Wert aus einem Wertebereich von 350 mm bis 450 mm auf. Der Transportabschnitt des Transportelements bildet vorzugsweise die Produktauflagefläche. Die Produktauflagefläche ist vorzugsweise durch die maximale Längserstreckung des Transportabschnitts und durch eine maximale Quererstreckung, insbesondere eine maximale Breite, des Transportabschnitts definiert. Die maximale Quererstreckung, insbesondere die maximale Breite, des Transportabschnitts erstreckt sich zumindest im Wesentlichen senkrecht zur Haupttransportrichtung und/oder zumindest im Wesentlichen parallel zur Bewegungsachse. Es ist denkbar, dass die Fördervorrichtung zur erfindungsgemäßen Lösung in einer alternativen Ausgestaltung derart ausgebildet ist, dass die Führungseinheit unabhängig von dem weiteren Führungselement zu einer Führung, insbesondere zu einer Umlenkung, des endlosen weiteren Transportelements ausgebildet ist. Vorzugsweise umfasst die Fördervorrichtung in der alternativen Ausgestaltung, insbesondere in der unabhängig von dem weiteren Führungselement ausgebildeten Ausgestaltung der Führungseinheit, zumindest eine Transporteinheit, die zumindest ein endloses Transportelement, insbesondere ein endloses Förderband, umfasst, das eine Produktauflagefläche zu einer Aufnahme von zu fördernden Produkten aufweist, zumindest eine Führungseinheit zu einer Führung des Transportelements, die zumindest ein, insbesondere beweglich gelagertes, Führungselement, insbesondere eine Führungsrolle, aufweist, und zumindest eine Lagereinheit zu einer schwenkbaren oder kippbaren Lagerung der Führungseinheit zusammen mit der Transporteinheit relativ zu einer Rahmeneinheit einer Produktionsanlage, insbesondere um eine zumindest im Wesentlichen parallel zur Produktauflagefläche verlaufende Bewegungsachse der Führungseinheit, wobei eine zumindest im Wesentlichen parallel zu einer Haupttransportrichtung der Transporteinheit verlaufende, insbesondere entlang einer zumindest im Wesentlichen parallel zur Produktauflagefläche verlaufenden Richtung erstreckende, maximale Längserstreckung eines Transportabschnitts des Transportelements, der mittels der Lagereinheit schwenkbar oder kippbar ist, kleiner ist als 750 mm. Durch die erfindungsgemäße Ausgestaltung kann vorteilhaft eine kompakte Weiche im Bereich der Fördertechnik, insbesondere des Produkthandlings, erreicht werden, insbesondere zu einer Übergabe oder zu einer Aufnahme von Produkten an oder von vertikal in unterschiedlichen Ebenen angeordneten Pufferspeichern und/oder Austragsförderbändern. Es kann vorteilhaft eine Weiche mit einer geringen maximalen Gesamtlängserstreckung realisiert werden. Es kann vorteilhaft eine geringe Belastung des Transportelements während einer Schwenk- oder Kippbewegung ermöglicht werden, insbesondere da das gesamte Transportelement zusammen mit der dem Transportelement zugeordneten Führungseinheit schwenkbar oder kippbar ist. Es kann vorteilhaft die gesamte Produktauflagefläche des Transportelements geschwenkt oder gekippt werden, insbesondere um eine vorteilhafte Übergabe oder Aufnahme von Produkten an oder von vertikal in unterschiedlichen Ebenen angeordneten Pufferspeichern und/oder Austragsförderbändern zu ermöglichen.

Ferner wird vorgeschlagen, dass das zumindest eine weitere Führungselement in einem Nahbereich eines Endes der Führungseinheit angeordnet ist, an dem die Bewegungsachse der Führungseinheit angeordnet ist. Der Nahbereich der Führungseinheit erstreckt sich vorzugsweise ausgehend von dem Ende der Führungseinheit bis maximal zu einer Mitte der Führungseinheit, insbesondere betrachtet entlang der Haupttransportrichtung. Die Mitte der Führungseinheit weist entlang der Haupttransportrichtung bevorzugt einen maximalen Abstand zum Ende der Führungseinheit auf, der 50 % einer maximalen Längserstreckung der Führungseinheit entspricht. Die Mitte der Führungseinheit weist entlang der Haupttransportrichtung bevorzugt einen maximalen Abstand zum weiteren Ende der Führungseinheit auf, der 50 % einer maximalen Längserstreckung der Führungseinheit entspricht. Insbesondere ist die Mitte der Führungseinheit zum Ende und zum weiteren Ende der Führungseinheit gleichweit beabstandet. Durch die erfindungsgemäße Ausgestaltung kann vorteilhaft eine besonders kompakte Ausgestaltung der Fördervorrichtung mit einer bauraumsparenden Anordnung des weiteren Führungselements erreicht werden. Es kann vorteilhaft eine geringe Belastung des weiteren Transportelements bei einer Schwenkbewegung oder Kippbewegung der Führungseinheit erreicht werden, insbesondere da das weitere Transportelement sich lediglich mit dem Umlenkbereich in die Führungseinheit hinein erstreckt. Es kann vorteilhaft eine kompakte Weiche im Bereich der Fördertechnik, insbesondere des Produkthandlings, erreicht werden, insbesondere zu einer Übergabe oder zu einer Aufnahme von Produkten an oder von vertikal in unterschiedlichen Ebenen angeordneten Pufferspeichern und/oder Austragsförderbändern. Es kann vorteilhaft eine Weiche mit einer geringen maximalen Gesamtlängserstreckung realisiert werden.

Des Weiteren wird vorgeschlagen, dass das zumindest eine weitere Führungselement relativ zur Bewegungsachse der Führungseinheit beabstandet angeordnet ist und einen, insbesondere entlang einer zumindest im Wesentlichen parallel zur Produktauflagefläche verlaufenden Richtung sich erstreckenden, maximalen Abstand zur Bewegungsachse aufweist, der kleiner ist als 400 mm. Der maximale Abstand des weiteren Führungselements relativ zur Bewegungsachse entlang der zumindest im Wesentlichen parallel zur Produktauflagefläche verlaufenden Richtung ist insbesondere kleiner als 350 mm, bevorzugt kleiner als 300 mm und besonders bevorzugt kleiner als 280 mm. Ganz besonders bevorzugt weist der maximale Abstand des weiteren Führungselements relativ zur Bewegungsachse entlang der zumindest im Wesentlichen parallel zur Produktauflagefläche verlaufenden Richtung einen Wert zwischen 250 mm und 320 mm auf. Vorzugsweise wird der maximale Abstand des weiteren Führungselements zur Bewegungsachse durch einen Abstand zwischen der Bewegungsachse und einer Rotationsachse des weiteren Führungselements entlang der zumindest im Wesentlichen parallel zur Produktauflagefläche verlaufenden Richtung definiert. Es ist jedoch auch denkbar, dass der maximale Abstand des weiteren Führungselements zur Bewegungsachse durch einen Abstand zwischen der Bewegungsachse und einer, insbesondere der Bewegungsachse abgewandten, Außenfläche des weiteren Führungselements entlang der zumindest im Wesentlichen parallel zur Produktauflagefläche verlaufenden Richtung definiert wird. Durch die erfindungsgemäße Ausgestaltung kann vorteilhaft eine geringe Neigung des weiteren Transportelements und somit eine geringe Zugbelastung im weiteren Transportelements während einer Schwenkbewegung oder einer Kippbewegung der Führungseinheit realisiert werden. Es kann vorteilhaft eine besonders kompakte Ausgestaltung der Fördervorrichtung mit einer bauraumsparenden Anordnung des weiteren Führungselements erreicht werden. Es kann vorteilhaft eine geringe Belastung des weiteren Transportelements bei einer Schwenkbewegung oder Kippbewegung der Führungseinheit erreicht werden, insbesondere da das weitere Transportelement sich lediglich mit dem Umlenkbereich in die Führungseinheit hinein erstreckt. Es kann vorteilhaft eine kompakte Weiche im Bereich der Fördertechnik, insbesondere des Produkthandlings, erreicht werden, insbesondere zu einer Übergabe oder zu einer Aufnahme von Produkten an oder von vertikal in unterschiedlichen Ebenen angeordneten Pufferspeichern und/oder Austragsförderbändern. Es kann vorteilhaft eine Weiche mit einer geringen maximalen Gesamtlängserstreckung realisiert werden.

Weiterhin wird vorgeschlagen, dass die Fördervorrichtung zumindest eine Antriebseinheit, insbesondere eine Elektromotoreinheit, umfasst, die zumindest ein Antriebselement, insbesondere eine Antriebsrolle, zu einem, insbesondere umlaufenden, Antrieb des Transportelements relativ zur, insbesondere um die, Führungseinheit umfasst, wobei zumindest das Antriebselement an der Führungseinheit angeordnet ist und mittels der Lagereinheit zusammen mit der Führungseinheit und der Transporteinheit relativ zur Rahmeneinheit schwenkbar oder kippbar gelagert ist. Das Antriebselement kann direkt mit einem Motor, insbesondere mit einem Elektromotor, der Antriebseinheit antreibbar sein oder das Antriebselement kann indirekt, wie beispielsweise über einen Riemen- oder Kettentrieb der Antriebseinheit, antreibbar sein. Das Antriebselement ist vorzugsweise als Antriebsrolle ausgebildet. Insbesondere ist das Antriebselement zwischen den Seitenteilen der Führungseinheit angeordnet, vorzugsweise an zumindest einem der Seitenteile drehbar gelagert. Vorzugsweise ist die Antriebseinheit zu einem Antrieb des Transportelements in zwei entgegengesetzte Richtungen, insbesondere zumindest im Wesentlichen parallel zur Haupttransportrichtung verlaufenden Richtungen, vorgesehen. Vorzugsweise ist das Transportelement mittels der Antriebseinheit in eine vom weiteren Transportelement abgewandte Richtung antreibbar, beispielsweise um die Produkte einem Pufferspeicher zuzuführen oder um Produkte einem Austragsförderband zuzuführen, vorzugsweise in Abhängigkeit von einer Schwenk- oder Kippposition der Fördervorrichtung. Bevorzugt ist das Transportelement mittels der Antriebseinheit in eine dem weiteren Transportelement zugewandte Richtung antreibbar, beispielsweise um die Produkte von dem Pufferspeicher zu übernehmen, insbesondere in Abhängigkeit von einer Schwenk- oder Kippposition der Fördervorrichtung. Zu einer Ansteuerung der Antriebseinheit umfasst die Fördervorrichtung oder die die Fördervorrichtung umfassende Produktionsanlage zumindest eine, insbesondere eine, einem Fachmann bereits bekannte, Steuer- oder Regeleinheit. Vorzugsweise umfasst die Fördervorrichtung zumindest eine Spanneinheit, die zu einer Spannung des Transportelements vorgesehen ist. Die Spanneinheit weist vorzugsweise zumindest ein Spannelement, insbesondere einen Hydraulik- oder Pneumatikzylinder, auf. Das Spannelement ist bevorzugt dazu vorgesehen, auf eine Spannrolle der Spanneinheit einzuwirken, insbesondere um eine Spannung des Transportelements einzustellen. Das Spannelement ist vorzugsweise an der Führungseinheit angeordnet, insbesondere daran befestigt und/oder daran gelagert. Die Spannrolle ist bevorzugt an der Führungseinheit gelagert. Bevorzugt ist die Spanneinheit als Ganzes an der Führungseinheit angeordnet und mittels der Lagereinheit zusammen mit der Führungseinheit und der Transporteinheit relativ zur Rahmeneinheit bewegbar, insbesondere schwenkbar oder kippbar, gelagert. Durch die erfindungsgemäße Ausgestaltung kann vorteilhaft ein zuverlässiger Antrieb des Transportelements erreicht werden. Es kann vorteilhaft ein direkter Antrieb des Transportelements an der sich bewegenden Führungseinheit realisiert werden, wodurch geringe Belastungen des Transportelements realisierbar sind, insbesondere da eine Spannung des Transportelements während einer Bewegung der Führungseinheit weitestgehend gleichbleibend ist. Es kann vorteilhaft eine kompakte Weiche im Bereich der Fördertechnik, insbesondere des Produkthandlings, erreicht werden, insbesondere zu einer Übergabe oder zu einer Aufnahme von Produkten an oder von vertikal in unterschiedlichen Ebenen angeordneten Pufferspeichern und/oder Austragsförderbändern. Es kann vorteilhaft eine Weiche mit einer geringen maximalen Gesamtlängserstreckung realisiert werden.

Zudem wird vorgeschlagen, dass die Fördervorrichtung zumindest eine, insbesondere die bereits zuvor genannte, Antriebseinheit, insbesondere eine Elektromotoreinheit, umfasst, die vollständig an der Führungseinheit angeordnet ist und mittels der Lagereinheit zusammen mit der Führungseinheit und der Transporteinheit relativ zur Rahmeneinheit schwenkbar oder kippbar gelagert ist. Die Antriebseinheit umfasst vorzugsweise zumindest das Antriebselement und zumindest den Motor. Es ist denkbar, dass die Antriebseinheit weitere Elemente, wie beispielsweise ein Getriebe, einen Riemen oder eine Kette, oder sonstige, einem Fachmann als sinnvoll erscheinende Elemente umfasst, die alle an der Führungseinheit angeordnet sind, insbesondere daran befestigt und/oder daran gelagert sind. Vorzugsweise ist der Motor der Antriebseinheit an zumindest einem der Seitenteile der Führungseinheit angeordnet, insbesondere daran befestigt. Die Antriebseinheit kann teilweise an einer Außenseite der Führungseinheit, teilweise an einer Innenseite oder vollständig an einer Innenseite der Führungseinheit angeordnet sein. Bevorzugt ist die Antriebseinheit als Ganzes an der Führungseinheit angeordnet und mittels der Lagereinheit zusammen mit der Führungseinheit und der Transporteinheit relativ zur Rahmeneinheit bewegbar, insbesondere schwenkbar oder kippbar, gelagert. Durch die erfindungsgemäße Ausgestaltung kann vorteilhaft eine Vielzahl an Bauteilen an der sich bewegenden Führungseinheit angeordnet werden. Es kann vorteilhaft ein hoher Wartungs- und Servicekomfort erreicht werden, da die Fördervorrichtung einfach austauschbar ist. Es kann vorteilhaft ein direkter Antrieb des Transportelements an der sich bewegenden Führungseinheit realisiert werden, wodurch geringe Belastungen des Transportelements realisierbar sind, insbesondere da eine Spannung des Transportelements während einer Bewegung der Führungseinheit weitestgehend gleichbleibend ist. Es kann vorteilhaft eine kompakte Weiche im Bereich der Fördertechnik, insbesondere des Produkthandlings, erreicht werden, insbesondere zu einer Übergabe oder zu einer Aufnahme von Produkten an oder von vertikal in unterschiedlichen Ebenen angeordneten Pufferspeichern und/oder Austragsförderbändern. Es kann vorteilhaft eine Weiche mit einer geringen maximalen Gesamtlängserstreckung realisiert werden.

Des Weiteren wird vorgeschlagen, dass die Fördervorrichtung zumindest eine Ausrichtungseinheit zu einer Ausrichtung, insbesondere Zentrierung, des Transportelements relativ zur Führungseinheit umfasst, wobei die Ausrichtungseinheit an der Führungseinheit angeordnet ist und mittels der Lagereinheit zusammen mit der Führungseinheit und der Transporteinheit relativ zur Rahmeneinheit schwenkbar oder kippbar gelagert ist. Die Ausrichtungseinheit umfasst vorzugsweise zumindest eine Ausrichtrolle. Die Ausrichtrolle ist vorzugsweise an zumindest einem der Seitenteile der Führungseinheit angeordnet, insbesondere daran gelagert. Die Ausrichtungseinheit umfasst vorzugsweise zumindest einen Antrieb, wie beispielsweise einen Motor, insbesondere zumindest einen Stellmotor, einen Hydraulik- oder Pneumatikantrieb o. dgl., zu einer Bewegung der Ausrichtrolle, insbesondere auf eine, einem Fachmann bereits bekannte Art und Weise. Der Antrieb der Ausrichtungseinheit ist bevorzugt an zumindest einem der Seitenteile der Führungseinheit angeordnet, insbesondere daran befestigt. Die Ausrichtungseinheit ist bevorzugt auf eine, einem Fachmann bereits bekannte Art und Weise mittels der Steuer- oder Regeleinheit steuerbar oder regelbar. Die Ausrichtungseinheit kann teilweise an einer Außenseite der Führungseinheit, teilweise an einer Innenseite oder vollständig an einer Innenseite der Führungseinheit angeordnet sein. Bevorzugt ist die Ausrichtungseinheit als Ganzes an der Führungseinheit angeordnet und mittels der Lagereinheit zusammen mit der Führungseinheit und der Transporteinheit relativ zur Rahmeneinheit bewegbar, insbesondere schwenkbar oder kippbar, gelagert. Die Ausrichtungseinheit ist vorzugsweise zu einer so genannten Transportband- oder Gurtsteuerung vorgesehen. Durch die erfindungsgemäße Ausgestaltung kann vorteilhaft zuverlässig eine korrekte Ausrichtung des Transportelements sichergestellt werden, insbesondere auch während einer Schwenkbewegung oder Kippbewegung der Führungseinheit. Es kann vorteilhaft einem Verschleiß des Transportelements infolge einer fehlerhaften Ausrichtung entgegengewirkt werden. Es kann vorteilhaft eine Vielzahl an Bauteilen an der sich bewegenden Führungseinheit angeordnet werden. Es kann vorteilhaft ein hoher Wartungs- und Servicekomfort erreicht werden, da die Fördervorrichtung einfach austauschbar ist. Es kann vorteilhaft eine kompakte Weiche im Bereich der Fördertechnik, insbesondere des Produkthandlings, erreicht werden, insbesondere zu einer Übergabe oder zu einer Aufnahme von Produkten an oder von vertikal in unterschiedlichen Ebenen angeordneten Pufferspeichern und/oder Austragsförderbändern. Es kann vorteilhaft eine Weiche mit einer geringen maximalen Gesamtlängserstreckung realisiert werden.

Ferner wird vorgeschlagen, dass die Fördervorrichtung zumindest eine Abstreifeinheit zu einem Abstreifen von Rückständen am Transportelement von geförderten Produkten umfasst, wobei die Abstreifeinheit an der Führungseinheit angeordnet ist und mittels der Lagereinheit zusammen mit der Führungseinheit und der Transporteinheit relativ zur Rahmeneinheit schwenkbar oder kippbar gelagert ist. Die Abstreifeinheit umfasst zumindest ein Abstreifelement, insbesondere einen Schaber, das dazu vorgesehen ist, Rückstände am Transportelement von geförderten Produkten abzustreifen. Das Abstreifelement ist vorzugsweise in, insbesondere dauerhaftem, Kontakt mit dem Transportelement. Das Abstreifelement liegt bevorzugt auf eine, einem Fachmann bereits bekannte Art und Weise an dem Transportelement an, insbesondere während einer umlaufenden Bewegung des Transportelements. Bevorzugt ist die Abstreifeinheit als Ganzes an der Führungseinheit angeordnet und mittels der Lagereinheit zusammen mit der Führungseinheit und der Transporteinheit relativ zur Rahmeneinheit bewegbar, insbesondere schwenkbar oder kippbar, gelagert. Durch die erfindungsgemäße Ausgestaltung kann vorteilhaft zuverlässig eine Reinigung des Transportelements erreicht werden. Es kann vorteilhaft eine Vielzahl an Bauteilen an der sich bewegenden Führungseinheit angeordnet werden. Es kann vorteilhaft ein hoher Wartungs- und Servicekomfort erreicht werden, da die Fördervorrichtung einfach austauschbar ist. Es kann vorteilhaft eine kompakte Weiche im Bereich der Fördertechnik, insbesondere des Produkthandlings, erreicht werden, insbesondere zu einer Übergabe oder zu einer Aufnahme von Produkten an oder von vertikal in unterschiedlichen Ebenen angeordneten Pufferspeichern und/oder Austragsförderbändern. Es kann vorteilhaft eine Weiche mit einer geringen maximalen Gesamtlängserstreckung realisiert werden.

Vorzugsweise ist die Führungseinheit zusammen mit der Transporteinheit mittels der Lagereinheit schwenkbar oder kippbar um eine zumindest im Wesentlichen parallel zu einer Standfläche der Rahmeneinheit verlaufende Bewegungsachse der Füh-
rungseinheit gelagert. Die Standfläche der Rahmeneinheit wird vorzugsweise durch eine oder mehrere Flächen eines oder mehrerer Standfüße der Rahmeneinheit gebildet. Die Rahmeneinheit steht bevorzugt mittels der Standfläche in, insbesondere direktem, Kontakt mit einem Untergrund, auf dem die Produktionsanlage angeordnet ist. Durch die erfindungsgemäße Ausgestaltung kann vorteilhaft eine Produktionsanlage mit einer kompakten Weiche im Bereich der Fördertechnik, insbesondere des Produkthandlings, erreicht werden, insbesondere zu einer Übergabe oder zu einer Aufnahme von Produkten an oder von vertikal in unterschiedlichen Ebenen angeordneten Pufferspeichern und/oder Austragsförderbändern. Es kann vorteilhaft eine Weiche mit einer geringen maximalen Gesamtlängserstreckung realisiert werden. Es kann vorteilhaft eine geringe Belastung des Transportelements während einer Schwenk- oder Kippbewegung ermöglicht werden, insbesondere da das gesamte Transportelement zusammen mit der dem Transportelement zugeordneten Führungseinheit schwenkbar oder kippbar ist. Infolge der teilweisen Mitbewegung des weiteren Transportelements, insbesondere des Umlenkbereichs des weiteren Transportelements, kann vorteilhaft ein produktschonender Übergang zwischen dem Transportelement und dem weiteren Transportelement realisiert werden.

Ferner geht die Erfindung aus von einem Verfahren zu einem Fördern von Produkten, insbesondere von verpackten und/oder unverpackten Lebensmitteln, mittels der Fördervorrichtung der Produktionsanlage. Es wird vorgeschlagen, dass zumindest das Führungselement der Führungseinheit der Fördervorrichtung zusammen mit dem Transportelement der Transporteinheit der Fördervorrichtung relativ zu der Rahmeneinheit der Produktionsanlage um die zumindest im Wesentlichen parallel zu der Produktauflagefläche verlaufende Bewegungsachse der Führungseinheit, geschwenkt oder gekippt wird, wobei die Führungseinheit zumindest das weitere Führungselement zu einer Umlenkung des endlosen weiteren Transportelements aufweist, wobei das weitere Führungselement zusammen mit dem Führungselement und mit der

Transporteinheit relativ zur Rahmeneinheit geschwenkt oder gekippt wird, wobei ein Umlenkbereich des weiteren Transportelements zusammen mit der Führungseinheit und der Transporteinheit mittels der Lagereinheit relativ zur Rahmeneinheit geschwenkt oder gekippt wird, während ein weiterer Bereich des weiteren Transportelements ungeschwenkt oder ungekippt verbleibt. Vorzugsweise werden die Produkte mittels der Haupttransporteinheit, insbesondere mittels des weiteren Transportelements, an das Transportelement übergeben. Das weitere Transportelement und das Transportelement werden bevorzugt in die gleiche Richtung angetrieben, insbesondere in die dem Austragsförderband zugewandte Richtung. Die Produkte werden vorzugsweise mittels des Transportelements an das Austragsförderband übergeben, insbesondere um ein Austragen der Produkte zu realisieren. Vorzugsweise ist die Fördervorrichtung, insbesondere die Produktauflagefläche, zu einem Austragen der Produkte relativ zur Horizontalebene geneigt. Sollte ein Austragen der Produkte infolge eines Produktstaus oder eines Störfalls an dem Austragsförderband nicht möglich sein, wird die Fördervorrichtung ausgehend von der zur Horizontalebene geneigten Ausrichtung der Fördervorrichtung, insbesondere der Produktauflagefläche, um die Bewegungsachse der Führungseinheit geschwenkt oder gekippt, um eine Ausrichtung der Fördervorrichtung, insbesondere der Produktauflagefläche, parallel zur Horizontalebene zu realisieren. Die Produkte sind in der parallel zur Horizontalebene befindlichen Ausrichtung der Fördervorrichtung, insbesondere der Produktauflagefläche, mittels des Transportelements dem Pufferspeicher zuführbar, wobei das Transportelement und das weitere Transportelement in die gleiche Richtung angetrieben werden, insbesondere in die dem Pufferspeicher zugewandte Richtung. Die Produkte werden in der parallel zur Horizontalebene befindlichen Ausrichtung der Fördervorrichtung, insbesondere der Produktauflagefläche, von der Haupttransporteinheit, insbesondere von dem weiteren Transportelement, an das Transportelement übergeben, das wiederum die Produkte an den Pufferspeicher übergibt, insbesondere zu einer Bestückung des Pufferspeichers. Das Transportelement, das weitere Transportelement und der Pufferspeicher werden vorzugsweise in die gleiche Richtung angetrieben.

Sollte der Produktstau oder der Störfall wieder weggefallen sein, erfolgt vorzugsweise ein Refeeden - also ein Wiederaufnehmen von Produkten von dem Pufferspeicher und einem anschließenden Übergeben der Produkte an das Austragsförderband. Beim Refeeden werden bevorzugt Produkte, die auf dem Pufferspeicher angeordnet sind, an die Fördervorrichtung, insbesondere an das Transportelement übergeben, wobei der Pufferspeicher in eine dem Transportelement zugewandte Richtung angetrieben wird und das Transportelement in eine dem weiteren Transportelement zugewandte Richtung angetrieben wird. Das Transportelement und der Pufferspeicher werden beim Refeeden vorzugsweise im Vergleich zu der bei einer Bestückung des Pufferspeichers erfolgten Bewegungsrichtung des Transportelements und des Pufferspeichers in eine entgegengesetzte Richtung bewegt. Vorzugsweise werden der Pufferspeicher und das Transportelement bei einer Übergabe der Produkte von dem Pufferspeicher an das Transportelement in die entgegengesetzte Richtung bewegt, die dem weiteren Transportelement zugewandt ausgerichtet ist. Das weitere Transportelement kann während des Refeedens weiterhin in Richtung des Transportelements angetrieben werden, bis Produkte, die mittels des weiteren Transportelements gefördert werden, in eine Nähe der Fördervorrichtung gelangen. Vorzugsweise erfolgt ein Stoppen einer Bewegung des weiteren Transportelements, sobald die Produkte, die mittels des weiteren Transportelements während des Refeedens gefördert werden, in die Nähe der Fördervorrichtung gelangen. Es kann eine Überwachungsvorrichtung, wie beispielsweise eine Lichtschranke, eine Kamera o. dgl. vorgesehen sein, die einen Bereich zwischen der Fördervorrichtung und dem weiteren Transportelement überwacht, um eine Bewegung des weiteren Transportelements während eines Refeedens zu stoppen. Nachdem die Produkte während eines Refeedens von dem Pufferspeicher an das Transportelement übergeben worden sind, erfolgt eine Schwenk- oder Kippbewegung der Fördervorrichtung, insbesondere des Transportelements, um die Bewegungsachse der Führungseinheit, um die Fördervorrichtung, insbesondere die Produktauflagefläche, wieder geneigt zur Horizontalebene auszurichten. Der Umlenkbereich des weiteren Transportelements ist vorzugsweise zusammen mit der Führungseinheit und der Transporteinheit mittels der Lagereinheit relativ zur Rahmeneinheit schwenkbar oder kippbar gelagert, während der weitere Bereich des weiteren Transportelements ungeschwenkt oder ungekippt verbleibt. Sobald die Schwenk- oder Kippbewegung der Fördervorrichtung, insbesondere des Transportelements, beendet ist, wird das Transportelement in die dem Auftragsförderband zugewandte Richtung angetrieben und die Produkte werden von dem Transportelement an das Auftragsförderband übergeben. Das weitere Transportelement wird vorzugsweise wieder in die dem Transportelement zugewandte Richtung angetrieben, um die Produkte an das Transportelement zu übergeben, das wiederum die Produkte an das Auftragsförderband übergibt. Es kann vorteilhaft eine Laufrichtung des Transportelements geändert werden, so dass das Transportelement und das weitere Transportelement in gegensätzliche Laufrichtungen bewegt werden können. Weitere Schritte des erfindungsgemäßen Verfahrens sind vorzugsweise analog zur Beschreibung einer Ausgestaltung und/oder einer Funktionsweise der Fördervorrichtung und/oder der Produktionsanlage auf das Verfahren lesbar. Durch die erfindungsgemäße Ausgestaltung kann ein vorteilhaftes Verfahren zu einer Übergabe oder zu einer Aufnahme von Produkten an oder von vertikal in unterschiedlichen Ebenen angeordneten Pufferspeichern und/oder Austragsförderbändern erreicht werden, das einen vorteilhaft material- und produktschonenden Betrieb ermöglicht. Es kann vorteilhaft eine geringe Belastung des Transportelements während einer Schwenk- oder Kippbewegung ermöglicht werden, insbesondere da das gesamte Transportelement zusammen mit der dem Transportelement zugeordneten Führungseinheit schwenkbar oder kippbar ist.

Die erfindungsgemäße Produktionsanlage und/oder das erfindungsgemäße Verfahren sollen/soll hierbei nicht auf die oben beschriebene Anwendung und Ausführungsform beschränkt sein. Insbesondere können/kann die erfindungsgemäße Produktionsanlage und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: eine Teilansicht einer erfindungsgemäßen Produktionsanlage mit einer Rahmeneinheit und mit einer erfindungsgemäßen Fördervorrichtung in einer schematischen Darstellung,
- Fig. 2: eine Detailansicht der erfindungsgemäßen Fördervorrichtung in einer schematischen Darstellung,
- Fig. 3: eine weitere Detailansicht der erfindungsgemäßen Fördervorrichtung in einer schematischen Darstellung,
- Fig. 4: eine Schnittansicht der erfindungsgemäßen Fördervorrichtung in einer schematischen Darstellung,
- Fig. 5: einen schematischen Verfahrensablauf eines erfindungsgemäßen Verfahrens zu einem Fördern von Produkten mittels der erfindungsgemäßen Fördervorrichtung,
- Fig. 6a: eine Detailansicht der erfindungsgemäßen Produktionsanlage in einem Austragsbetrieb, bei dem Produkte einem Austragsförderband zugeführt werden, in einer schematischen Darstellung,
- Fig. 6b: eine Detailansicht der erfindungsgemäßen Produktionsanlage in einem Pufferbetrieb, bei dem ein Pufferspeicher mit Produkten bestückt wird, in einer schematischen Darstellung,
- Fig. 6c: eine Detailansicht der erfindungsgemäßen Produktionsanlage in einem Refeedbetrieb, bei dem die Produkte aus dem Pufferspeicher entnommen werden und wieder dem Austragsförderband zugeführt werden, in einer schematischen Darstellung und
- Fig. 6d: eine Detailansicht der erfindungsgemäßen Produktionsanlage in dem Austragsbetrieb nach einem Refeedbetrieb in einer schematischen Darstellung.

### Beschreibung des Ausführungsbeispiels

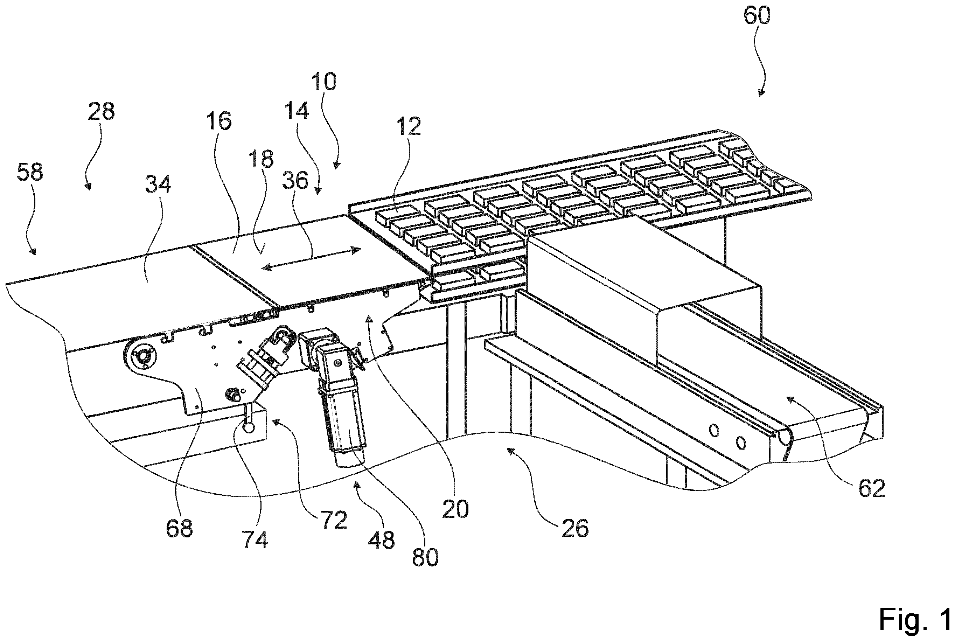

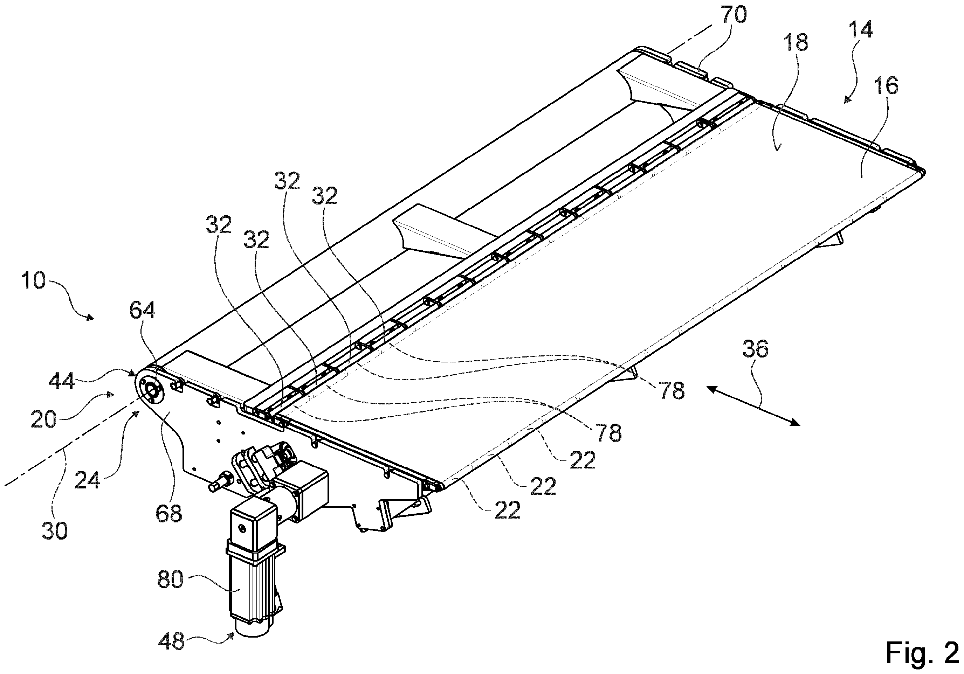

Figur 1 zeigt eine Produktionsanlage 28, die beispielsweise als eine Lebensmittelverpackungsanlage und/oder als Lebensmittelproduktionsanlage ausgebildet ist. Die Produktionsanlage 28 umfasst zumindest eine Fördervorrichtung 10 zu einem Fördern von Produkten 12, insbesondere von verpackten und/oder unverpackten Lebensmitteln, und zumindest eine Rahmeneinheit 26, zu der zumindest eine Führungseinheit 20 der Fördervorrichtung 10 zusammen mit einer Transporteinheit 14 der Fördervorrichtung 10 mittels einer Lagereinheit 24 (vgl. Figuren 2 bis 4) der Fördervorrichtung 10 schwenkbar oder kippbar gelagert ist, insbesondere um eine zumindest im Wesentlichen parallel zu einer Standfläche der Rahmeneinheit 26 verlaufende Bewegungsachse 30 (vgl. Figuren 2 bis 4) der Führungseinheit 20.

Die Produktionsanlage 28 umfasst vorzugsweise eine Haupttransporteinheit 58, mittels derer Produkte 12, die beispielsweise mittels einer Herstelleinheit (hier nicht näher dargestellt) der Produktionsanlage 28 hergestellt werden, zu weiteren Einheiten, wie beispielsweise Verpackungs- und/oder Sortiereinheiten (hier nicht näher dargestellt) der Produktionsanlage 28, auf eine, einem Fachmann bereits bekannte Art und Weise gefördert werden können. Die Haupttransporteinheit 58 umfasst vorzugsweise einen Pufferspeicher 60, der dazu vorgesehen ist, Produkte 12 für einen Weitertransport zwischenzuspeichern. Ferner umfasst die Haupttransporteinheit 58 zumindest ein Austragsförderband 62, mittels dessen Produkte 12 ausgetragen werden können, insbesondere weiteren Einheiten der Produktionsanlage 28 zugeführt werden können. Die Fördervorrichtung 10 ist vorzugsweise in die Haupttransporteinheit 58 integriert oder zumindest daran angeordnet, insbesondere im Bereich des Pufferspeichers 60 und/oder des Austragsförderbands 62.

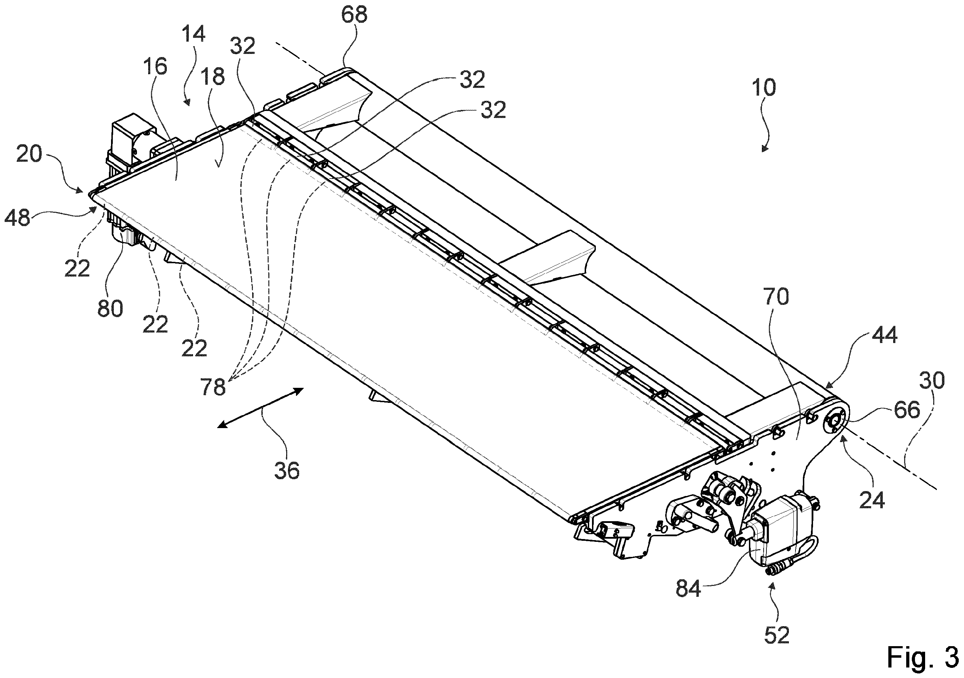

Figur 2 zeigt eine Detailansicht der Fördervorrichtung 10. Die Fördervorrichtung 10 zu einem Fördern von Produkten 12, insbesondere von verpackten und/oder unverpackten Lebensmitteln, umfasst zumindest die Transporteinheit 14, die zumindest ein endloses Transportelement 16, insbesondere ein endloses Förderband, umfasst, das eine Produktauflagefläche 18 zu einer Aufnahme von zu fördernden Produkten 12 aufweist, zumindest die Führungseinheit 20 zu einer Führung des Transportelements 16, die zumindest ein, insbesondere beweglich gelagertes, Führungselement 22, insbesondere eine Führungsrolle, aufweist, und zumindest die Lagereinheit 24 zu einer schwenkbaren oder kippbaren Lagerung der Führungseinheit 20 zusammen mit der Transporteinheit 14 relativ zur Rahmeneinheit 26 der Produktionsanlage 28, insbesondere um die zumindest im Wesentlichen parallel zur Produktauflagefläche 18 verlaufende Bewegungsachse 30 der Führungseinheit 20. Bevorzugt weist die Führungseinheit 20 zumindest zwei Seitenteile 68, 70 auf, an deren Ende 44 die Lagereinheit 24 angeordnet ist. Die Bewegungsachse 30 der Führungseinheit 20 wird vorzugsweise durch eine, insbesondere physische, Lagerachse, einen Lagerbolzen, eine Lagerwelle, eine Lagerbuchse o. dgl. der Lagereinheit 24 definiert. In dem in den Figuren 2 bis 4 dargestellt Ausführungsbeispiel wird die Bewegungsachse 30 der Führungseinheit 20 durch zwei Lagerbuchsen 64, 66 definiert (vgl. Figuren 2 und 3). Die Lagerbuchsen 64, 66 sind an zwei sich abgewandten Seiten der Führungseinheit 20 angeordnet (vgl. Figuren 2 und 3). Insbesondere ist je Seitenteil 68, 70 eine Lagerbuchse 64, 66 vorgesehen. Die Lagerbuchsen 64, 66 sind zu einem Zusammenwirken mit Lagerbolzen (hier nicht näher dargestellt) der Haupttransporteinheit 58 oder der Rahmeneinheit 26 vorgesehen, die an der Rahmeneinheit 26 oder an der Haupttransporteinheit 58 angeordnet sind. Die Lagerbolzen greifen vorzugsweise in die Lagerbuchsen 64, 66 ein, um die Führungseinheit 20, insbesondere die gesamte Fördervorrichtung 10 relativ zur Rahmeneinheit 26 schwenkbar oder kippbar um die Bewegungsachse 30 zu lagern. Es ist jedoch auch denkbar, dass die Lagereinheit 24 eine andere, einem Fachmann als sinnvoll erscheinende Ausgestaltung aufweist, mittels derer die Führungseinheit 20 schwenkbar oder kippbar um die Bewegungsachse 30 gelagert ist.

Die Führungseinheit 20 umfasst zumindest ein weiteres Führungselement 32 zu einer Führung, insbesondere zu einer Umlenkung, eines endlosen weiteren Transportelements 34 (vgl. Figur 1), insbesondere der Haupttransporteinheit 58, wobei das weitere Führungselement 32 mittels der Lagereinheit 24 zusammen mit dem Führungselement 22 zur Führung des Transportelements 16 und mit der Transporteinheit 14 relativ zur Rahmeneinheit 26 schwenkbar oder kippbar gelagert ist. Das weitere Transportelement 34 ist vorzugsweise Teil der Haupttransporteinheit 58 der die Fördervorrichtung 10 umfassenden Produktionsanlage 28. Das weitere Transportelement 34 ist insbesondere als endloses Förderband ausgebildet. Vorzugsweise ist das weitere Transportelement 34 umlaufend antreibbar. Bevorzugt ist zumindest ein Umlenkbereich des weiteren Transportelements 34 an der Führungseinheit 20 angeordnet. Der Umlenkbereich des weiteren Transportelements 34 wird vorzugsweise durch einen Bereich des weiteren Transportelements 34 gebildet, in dem das weitere Transportelement 34 derart mittels des weiteren Führungselements 32 umlenkbar ist, dass das weitere Transportelement 34 um einen Winkel von mehr als 90° umlenkbar ist, insbesondere umgelenkt wird, und vorzugsweise eine Richtungsänderung in Bezug auf eine Haupttransportrichtung 36 erfährt, insbesondere nach einem Umlenken entgegen der Haupttransportrichtung 36 bewegt wird. Ein weiterer Bereich des weiteren Transportelements 34 ist an einer weiteren Führungseinheit (hier nicht näher dargestellt) der die Fördervorrichtung 10 umfassenden Produktionsanlage 28 angeordnet, insbesondere gelagert. Die weitere Führungseinheit ist vorzugsweise ein Teil der Haupttransporteinheit 58 oder der Rahmeneinheit 26. Der Umlenkbereich des weiteren Transportelements 34 ist zusammen mit der Führungseinheit 20 und der Transporteinheit 14 mittels der Lagereinheit 24 relativ zur Rahmeneinheit 26 schwenkbar oder kippbar gelagert, während der weitere Bereich des weiteren Transportelements 34 ungeschwenkt oder ungekippt verbleibt.

Bevorzugt umfasst die Führungseinheit 20 eine Vielzahl an Führungselementen 22 und/oder eine Vielzahl an weiteren Führungselementen 32, die gleichmäßig über eine maximale Breite der Führungseinheit 20 verteilt angeordnet sein können. Beispielsweise kann eine Vielzahl an Führungselementen 22 gleichmäßig über eine maximale Breite der Führungseinheit 20 verteilt angeordnet sein und/oder es kann eine Vielzahl an weiteren Führungselementen 32 gleichmäßig über eine maximale Breite der Führungseinheit 20 verteilt angeordnet sein (vgl. Figuren 2 und 3). Beispielsweise ist eine Vielzahl an Führungselementen 22 entlang einer quer, insbesondere zumindest im Wesentlichen senkrecht, zu einer Haupttransportrichtung 36 der Transporteinheit 14 verlaufenden Richtung in Reihe angeordnet. Beispielsweise ist eine Vielzahl an weiteren Führungselementen 32 entlang der quer, insbesondere zumindest im Wesentlichen senkrecht, zur Haupttransportrichtung 36 der Transporteinheit 14 verlaufenden Richtung in Reihe angeordnet. Das/die Führungselement/e 22 und/oder das/die weitere/n Führungselement/e 32 sind/ist vorzugsweise zwischen den Seitenteilen 68, 70 angeordnet. Die Seitenteile 68, 70 der Führungseinheit 20 sind bevorzugt mittels der Lagereinheit 24 relativ zur Rahmeneinheit 26 schwenkbar oder kippbar gelagert. Bevorzugt sind die Seitenteile 68, 70 zu einer Anordnung und/oder Lagerung von Bauteilen der Führungseinheit 20 vorgesehen. Die Seitenteile 68, 70 sind insbesondere als Blechteile ausgebildet, die die Führungseinheit 20 seitlich begrenzen.

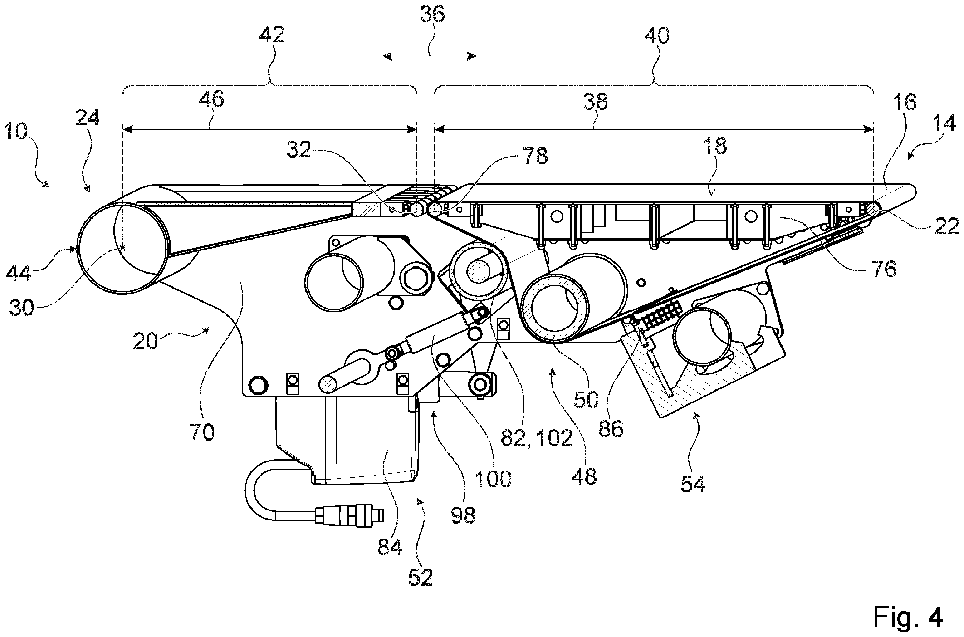

Das zumindest eine weitere Führungselement 32 ist in einem Nahbereich 42 des Endes 44 der Führungseinheit 20 angeordnet, an dem die Bewegungsachse 30 der Führungseinheit 20 angeordnet ist. Das zumindest eine weitere Führungselement 32 ist relativ zur Bewegungsachse 30 der Führungseinheit 20 beabstandet angeordnet und weist einen, insbesondere entlang der zumindest im Wesentlichen parallel zur Produktauflagefläche 18 verlaufenden Richtung sich erstreckenden, maximalen Abstand 46 (vgl. Figur 4) zur Bewegungsachse 30 auf, der kleiner ist als 400 mm. Der maximale Abstand 46 des weiteren Führungselements 32 relativ zur Bewegungsachse 30 entlang der zumindest im Wesentlichen parallel zur Produktauflagefläche 18 verlaufenden Richtung ist insbesondere kleiner als 350 mm, bevorzugt kleiner als 300 mm und besonders bevorzugt kleiner als 280 mm. Ganz besonders bevorzugt weist der maximale Abstand 46 des weiteren Führungselements 32 relativ zur Bewegungsachse 30 entlang der zumindest im Wesentlichen parallel zur Produktauflagefläche 18 verlaufenden Richtung einen Wert zwischen 250 mm und 320 mm auf.

Die Führungseinheit 20 umfasst insbesondere ferner zumindest eine Stückgutbahn 76, die zwischen den Seitenteilen 68, 70 angeordnet ist und die dazu vorgesehen ist, das Transportelement 16 zu unterstützen, insbesondere um einem Durchhängen des Transportelements 16 bei einer hohen Belastung durch eine große Masse der Produkte 12 entgegenzuwirken. Die Stückgutbahn 76 ist aus einem Hohlkammerprofil (vgl. Figur 4) hergestellt. Das/die Führungselement/e 22 ist/sind vorzugsweise an der Stückgutbahn 76 drehbar gelagert. Die Führungseinheit 20 weist zumindest ein zusätzliches Führungselement 78 auf, das an der Stückgutbahn 76 drehbar gelagert ist und zu einer Führung des Transportelements 16 vorgesehen ist. Vorzugsweise umfasst die Führungseinheit 20 eine Vielzahl an zusätzlichen Führungselementen 78, die analog zum Führungselement 22 ausgebildet und/oder an der Führungseinheit 20 angeordnet sind. Das/die Führungselement/e 22 ist/sind, betrachtet entlang der Haupttransportrichtung 36, bevorzugt an einer Seite der Stückgutbahn 76 angeordnet, die einer weiteren Seite der Stückgutbahn 76 abgewandt ist, an der das/die zusätzliche/n Führungselement/e 78 an der Stückgutbahn 76 angeordnet ist/sind. Die Produktauflagefläche 18 des Transportelements 16 ist insbesondere im Bereich der Stückgutbahn 76 angeordnet.

Vorzugsweise weist das Transportelement 16 einen Transportabschnitt 40 (vgl. Figur 4) auf, der mittels der Lagereinheit 24 schwenkbar oder kippbar ist und der eine zumindest im Wesentlichen parallel zur Haupttransportrichtung 36 der Transporteinheit 14 verlaufende, insbesondere entlang einer zumindest im Wesentlichen parallel zur Produktauflagefläche 18 verlaufenden Richtung sich erstreckende, maximale Längserstreckung 38 aufweist, die kleiner ist als 750 mm. Die maximale Längserstreckung 38 des Transportabschnitts 40 des Transportelements 16 ist insbesondere kleiner als 700 mm, bevorzugt kleiner als 600 mm und besonders bevorzugt kleiner als 500 mm. Ganz besonders bevorzugt weist die maximale Längserstreckung 38 des Transportabschnitts 40 des Transportelements 16 einen Wert aus einem Wertebereich von 350 mm bis 450 mm auf. Der Transportabschnitt 40 des Transportelements 16 bildet vorzugsweise die Produktauflagefläche 18. Die Produktauflagefläche 18 ist vorzugsweise durch die maximale Längserstreckung 38 des Transportabschnitts 40 und durch eine maximale Quererstreckung, insbesondere eine maximale Breite, des Transportabschnitts 40 definiert.

Die Fördervorrichtung 10 umfasst zumindest eine Antriebseinheit 48, insbesondere eine Elektromotoreinheit, die zumindest ein Antriebselement 50, insbesondere eine Antriebsrolle, zu einem, insbesondere umlaufenden, Antrieb des Transportelements 16 relativ zur, insbesondere um die, Führungseinheit 20 umfasst, wobei zumindest das Antriebselement 50 an der Führungseinheit 20 angeordnet ist und mittels der Lagereinheit 24 zusammen mit der Führungseinheit 20 und der Transporteinheit 14 relativ zur Rahmeneinheit 26 schwenkbar oder kippbar gelagert ist. Das Antriebselement 50 kann direkt mit einem Motor 80, insbesondere mit einem Elektromotor, der Antriebseinheit 48 antreibbar sein oder das Antriebselement 50 kann indirekt, wie beispielsweise über einen Riemen- oder Kettentrieb der Antriebseinheit 48, antreibbar sein. Das Antriebselement 50 ist vorzugsweise als Antriebsrolle ausgebildet. Insbesondere ist das Antriebselement 50 zwischen den Seitenteilen 68, 70 der Führungseinheit 20 angeordnet, vorzugsweise an zumindest einem der Seitenteile 68, 70 drehbar gelagert.

Die Fördervorrichtung 10 umfasst zumindest die Antriebseinheit 48, die vollständig an der Führungseinheit 20 angeordnet ist und mittels der Lagereinheit 24 zusammen mit der Führungseinheit 20 und der Transporteinheit 14 relativ zur Rahmeneinheit 26 schwenkbar oder kippbar gelagert ist. Vorzugsweise ist der Motor 80 der Antriebseinheit 48 an zumindest einem der Seitenteile 68, 70 der Führungseinheit 20 angeordnet, insbesondere daran befestigt. Die Antriebseinheit 48 kann teilweise an einer Außenseite der Führungseinheit 20, teilweise an einer Innenseite oder vollständig an einer Innenseite der Führungseinheit 20 angeordnet sein. Bevorzugt ist die Antriebseinheit 48 als Ganzes an der Führungseinheit 20 angeordnet und mittels der Lagereinheit 24 zusammen mit der Führungseinheit 20 und der Transporteinheit 14 relativ zur Rahmeneinheit 26 bewegbar, insbesondere schwenkbar oder kippbar, gelagert.

Die Fördervorrichtung 10 umfasst zumindest eine Ausrichtungseinheit 52 (vgl. Figuren 3 und 4) zu einer Ausrichtung, insbesondere Zentrierung, des Transportelements 16 relativ zur Führungseinheit 20, wobei die Ausrichtungseinheit 52 an der Führungseinheit 20 angeordnet ist und mittels der Lagereinheit 24 zusammen mit der Führungseinheit 20 und der Transporteinheit 14 relativ zur Rahmeneinheit 26 schwenkbar oder kippbar gelagert ist. Die Ausrichtungseinheit 52 umfasst vorzugsweise zumindest eine Ausrichtrolle 82 (vgl. Figur 4). Die Ausrichtrolle 82 ist vorzugsweise an zumindest einem der Seitenteile 68, 70 der Führungseinheit 20 angeordnet, insbesondere daran gelagert. Die Ausrichtungseinheit 52 umfasst vorzugsweise zumindest einen Antrieb 84 (vgl. Figur 3), wie beispielsweise einen Motor, insbesondere zumindest einen Stellmotor, einen Hydraulik- oder Pneumatikantrieb o. dgl., zu einer Bewegung der Ausrichtrolle 82, insbesondere auf eine, einem Fachmann bereits bekannte Art und Weise. Der Antrieb 84 ist vorzugsweise als Linearantrieb ausgebildet. Der Antrieb 84 der Ausrichtungseinheit 52 ist bevorzugt an zumindest einem der Seitenteile 68, 70 der Führungseinheit 20 angeordnet, insbesondere daran befestigt. Die Ausrichtungseinheit 52 ist bevorzugt auf eine, einem Fachmann bereits bekannte Art und Weise mittels der Steuer- oder Regeleinheit steuerbar oder regelbar. Die Ausrichtungseinheit 52 kann teilweise an einer Außenseite der Führungseinheit 20, teilweise an einer Innenseite oder vollständig an einer Innenseite der Führungseinheit 20 angeordnet sein. Bevorzugt ist die Ausrichtungseinheit 52 als Ganzes an der Führungseinheit 20 angeordnet und mittels der Lagereinheit 24 zusammen mit der Führungseinheit 20 und der Transporteinheit 14 relativ zur Rahmeneinheit 26 bewegbar, insbesondere schwenkbar oder kippbar, gelagert.

Des Weiteren umfasst die Fördervorrichtung 10 zumindest eine Spanneinheit 98, die zu einer Spannung des Transportelements 16 vorgesehen ist. Die Spanneinheit 98 weist vorzugsweise zumindest ein Spannelement 100, insbesondere einen Hydraulik- oder Pneumatikzylinder, auf. Das Spannelement 100 ist bevorzugt dazu vorgesehen, auf eine Spannrolle 102 der Spanneinheit 98 einzuwirken, insbesondere um eine Spannung des Transportelements 16 einzustellen. Das Spannelement 100 ist vorzugsweise an der Führungseinheit 20 angeordnet, insbesondere daran befestigt und/oder daran gelagert. Die Spannrolle 102 ist bevorzugt an der Führungseinheit 20 gelagert. Die Spannrolle 102 wird vorzugsweise von der Ausrichtrolle 82 gebildet. Es ist jedoch auch denkbar, dass die Spannrolle 102 separat zur Ausrichtrolle 82 ausgebildet ist und zusätzlich an der Führungseinheit 20 angeordnet ist. Bevorzugt ist die Spanneinheit 98 als Ganzes an der Führungseinheit 20 angeordnet und mittels der Lagereinheit 24 zusammen mit der Führungseinheit 20 und der Transporteinheit 14 relativ zur Rahmeneinheit 26 bewegbar, insbesondere schwenkbar oder kippbar, gelagert.

Ferner umfasst die Fördervorrichtung 10 zumindest eine Abstreifeinheit 54 (vgl. Figur 4) zu einem Abstreifen von Rückständen am Transportelement 16 von geförderten Produkten 12, wobei die Abstreifeinheit 54 an der Führungseinheit 20 angeordnet ist und mittels der Lagereinheit 24 zusammen mit der Führungseinheit 20 und der Transporteinheit 14 relativ zur Rahmeneinheit 26 schwenkbar oder kippbar gelagert ist. Die Abstreifeinheit 54 umfasst zumindest ein Abstreifelement 86, insbesondere einen Schaber, das dazu vorgesehen ist, Rückstände am Transportelement 16 von geförderten Produkten 12 abzustreifen. Das Abstreifelement 86 ist vorzugsweise in, insbesondere dauerhaftem, Kontakt mit dem Transportelement 16. Das Abstreifelement 86 liegt bevorzugt auf eine, einem Fachmann bereits bekannte Art und Weise an dem Transportelement 16 an, insbesondere während einer umlaufenden Bewegung des Transportelements 16. Bevorzugt ist die Abstreifeinheit 54 als Ganzes an der Führungseinheit 20 angeordnet und mittels der Lagereinheit 24 zusammen mit der Führungseinheit 20 und der Transporteinheit 14 relativ zur Rahmeneinheit 26 bewegbar, insbesondere schwenkbar oder kippbar, gelagert.

Die Fördervorrichtung 10 oder die Produktionsanlage 28 umfasst zumindest eine Weichenantriebseinheit 72 (vgl. Figur 1) zu einem Antrieb einer Schwenkbewegung oder einer Kippbewegung der Führungseinheit 20, insbesondere der Fördervorrichtung 10. Die Weichenantriebseinheit 72 umfasst vorzugsweise einen Antrieb (hier nicht näher dargestellt), der beispielsweise als ein Elektromotor, als ein Pneumatik- oder Hydraulikantrieb oder als ein anderer, einem Fachmann als sinnvoll erscheinender Antrieb ausgebildet sein kann. Vorzugsweise weist die Weichenantriebseinheit 72 zumindest ein Koppelglied 74 (Figur 1) auf, mittels dessen der Antrieb mit der Führungseinheit 20, insbesondere der Fördervorrichtung 10 antriebstechnisch verbunden ist. Das Koppelglied 74 ist vorzugsweise als Koppelstange, insbesondere als Gelenkzugstange o. dgl., ausgebildet, die über ein Exzenterelement (hier nicht näher dargestellt) der Weichenantriebseinheit 72 mit dem Antrieb verbunden ist. Es ist jedoch auch denkbar, dass das Koppelglied 74 mittels eines anderen, einem Fachmann als sinnvoll erscheinenden Getriebeelements mit dem Antrieb verbunden ist, insbesondere um eine Antriebskraft des Antriebs zu übersetzen und das Koppelglied 74 zu bewegen, was wiederum die Führungseinheit 20, insbesondere die Fördervorrichtung 10, um die Bewegungsachse 30 bewegt. Zu einer Ansteuerung der Weichenantriebseinheit 72 umfasst die Fördervorrichtung 10 oder die die Fördervorrichtung 10 umfassende Produktionsanlage 28 zumindest eine, insbesondere eine, einem Fachmann bereits bekannte, Steuer- oder Regeleinheit (hier nicht näher dargestellt).

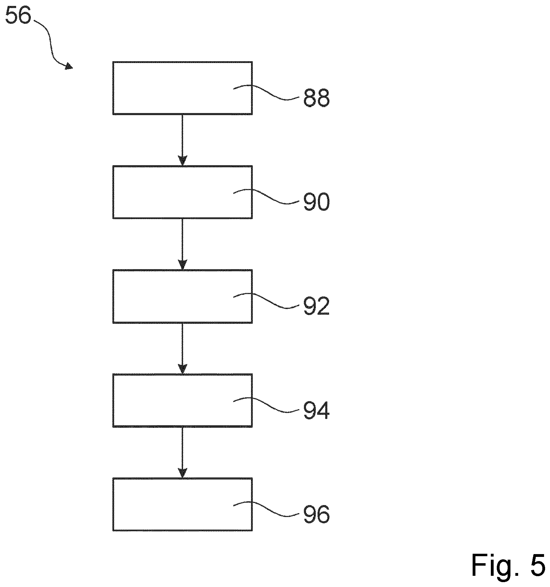

Figur 5 zeigt einen schematischen Ablauf eines Verfahrens 56 zu einem Fördern von Produkten 12, insbesondere von verpackten und/oder unverpackten Lebensmitteln, mittels der Fördervorrichtung 10. Bevorzugt werden die Produkte 12 in zumindest einem Verfahrensschritt 88 von der Herstelleinheit oder einer anderen, einem Fachmann als sinnvoll erscheinenden Einheit der Produktionsanlage 28 mittels der Haupttransporteinheit 58, insbesondere mittels des weiteren Transportelements 34, entlang der Haupttransportrichtung 36 gefördert. Die Produkte 12 werden in zumindest einem Verfahrensschritt 90 von der Haupttransporteinheit 58, insbesondere mittels des weiteren Transportelements 34, entlang der Haupttransportrichtung 36 an die Fördervorrichtung 10, insbesondere an das Transportelement 16 übergeben. In Abhängigkeit von einer Austragmöglichkeit mittels des Austragsförderbands 62 wird die Fördervorrichtung 10 in zumindest einem Verfahrensschritt 90 um die Bewegungsachse 30 geschwenkt oder gekippt, insbesondere um die Produkte 12 an das Austragsförderband 62 zu übergeben. Sollte das Austragsförderband 62 belegt sein, so werden die Produkte 12 mittels der Fördervorrichtung 10, insbesondere mittels des Transportelements 16, alternativ, vorzugsweise in einem Verfahrensschritt 92, an den Pufferspeicher 60 übergeben, insbesondere frei von einer Schwenkbewegung oder einer Kippbewegung der Fördervorrichtung 10. Sollte das Austragsförderband 62 wieder frei sein, werden die Produkte 12 in zumindest einem Verfahrensschritt 94 mittels der Fördervorrichtung 10, insbesondere mittels des Transportelements 16, von dem Pufferspeicher 60 aufgenommen. Anschließend wird die Fördervorrichtung 10 in zumindest einem Verfahrensschritt 96 um die Bewegungsachse 30 geschwenkt oder gekippt, um die Produkte 12 an das Austragsförderband 62 zu übergeben. Bei einer Schwenkbewegung oder einer Kippbewegung der Fördervorrichtung 10 wird zumindest das Führungselement 22 der Führungseinheit 20 der Fördervorrichtung 10 zusammen mit dem Transportelement 16 der Transporteinheit 14 der Fördervorrichtung 10 relativ zur Rahmeneinheit 26 der Produktionsanlage 28, insbesondere um die zumindest im Wesentlichen parallel zur Produktauflagefläche 18 verlaufende Bewegungsachse 30 der Führungseinheit 20, geschwenkt oder gekippt, wobei die Führungseinheit 20 zumindest das weitere Führungselement 32 zu einer Führung, insbesondere zu einer Umlenkung, des endlosen weiteren Transportelements 34 aufweist, wobei das weitere Führungselement 32 zusammen mit dem Führungselement 22 und mit der Transporteinheit 14 relativ zur Rahmeneinheit 26 geschwenkt oder gekippt wird. Das Verfahren 56 kann alternative oder zusätzliche Verfahrensschritte umfassen, insbesondere in Abhängigkeit von einer für einen Fachmann sinnvollen Anwendung des Verfahrens.

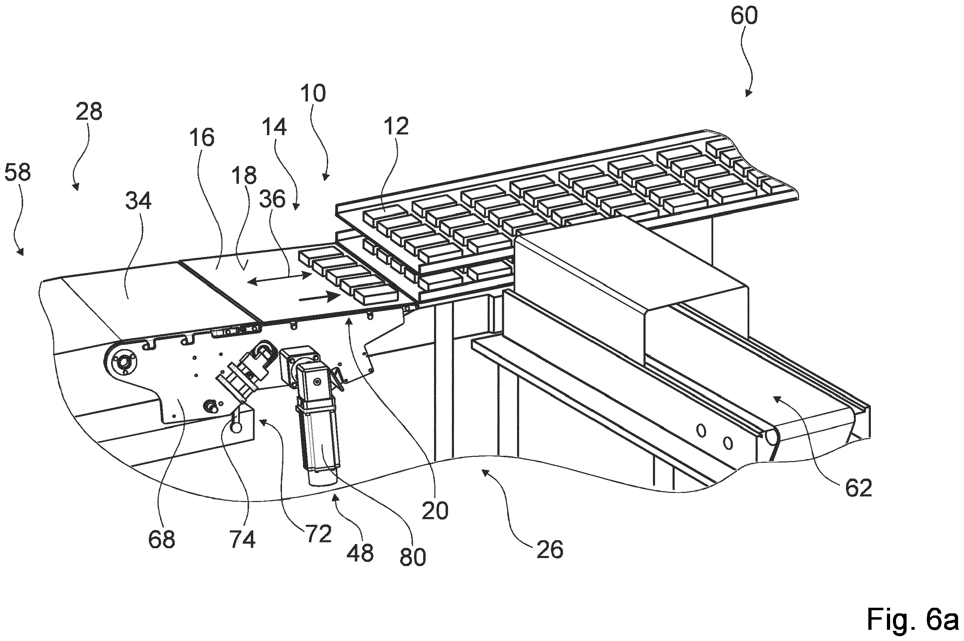

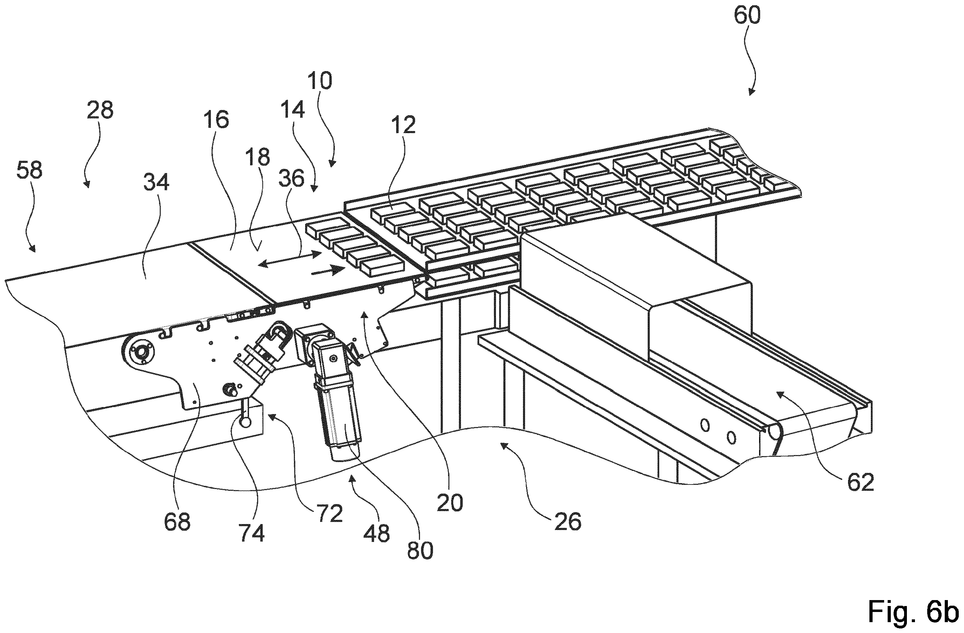

Figuren 6a bis 6d zeigen den oben bereits beschriebenen schematischen Ablauf des Verfahrens 56 anhand einer Zuordnung zur Produktionsanlage 28. Figur 6a zeigt einen Austragsbetrieb der Produktionsanlage 28, bei dem Produkte 12 dem Austragsförderband 62 zugeführt werden. Vorzugsweise werden die Produkte 12 mittels der Haupttransporteinheit 58, insbesondere mittels des weiteren Transportelements 34, an das Transportelement 16 übergeben. Das weitere Transportelement 34 und das Transportelement 16 werden bevorzugt in eine gleiche Richtung angetrieben, insbesondere in die dem Austragsförderband 62 zugewandte Richtung. In Bezug auf das Transportelement 16 ist die Richtung, in welche das Transportelement 16 bewegt wird, mit einem Pfeil in der Figur 6a angedeutet (vgl. Pfeil neben Haupttransportrichtung 36 in Figur 6a). Die Produkte 12 werden vorzugsweise mittels des Transportelements 16 an das Austragsförderband 62 übergeben, insbesondere um ein Austragen der Produkte 12 zu realisieren. Vorzugsweise ist die Fördervorrichtung 10, insbesondere die Produktauflagefläche 18, zu einem Austragen der Produkte 12 relativ zur Horizontalebene geneigt. Sollte ein Austragen der Produkte 12 infolge eines Produktstaus oder eines Störfalls an dem Austragsförderband 62 nicht möglich sein, wird die Fördervorrichtung 10 ausgehend von der zur Horizontalebene geneigten Ausrichtung der Fördervorrichtung 10, insbesondere der Produktauflagefläche 18, um die Bewegungsachse 30 der Führungseinheit 20 geschwenkt oder gekippt, um eine Ausrichtung der Fördervorrichtung 10, insbesondere der Produktauflagefläche 18, parallel zur Horizontalebene zu realisieren (vgl. Figur 6b). Die Produkte 12 sind in der parallel zur Horizontalebene befindlichen Ausrichtung der Fördervorrichtung 10, insbesondere der Produktauflagefläche 18, mittels des Transportelements 16 dem Pufferspeicher 60 zuführbar, wobei das Transportelement 16 und das weitere Transportelement 34 in die gleiche Richtung (vgl. Pfeil neben Haupttransportrichtung 36 in Figur 6b) angetrieben werden, insbesondere in die dem Pufferspeicher 60 zugewandte Richtung. Die Produkte 12 werden in der parallel zur Horizontalebene befindlichen Ausrichtung der Fördervorrichtung 10, insbesondere der Produktauflagefläche 18, von der Haupttransporteinheit 58, insbesondere von dem weiteren Transportelement 34, an das Transportelement 16 übergeben, das wiederum die Produkte 12 an den Pufferspeicher 60 übergibt, insbesondere zu einer Bestückung des Pufferspeichers 60. Das Transportelement 16, das weitere Transportelement 34 und der Pufferspeicher 60 werden vorzugsweise in die gleiche Richtung angetrieben (vgl. Pfeil neben Haupttransportrichtung 36 in Figur 6b).

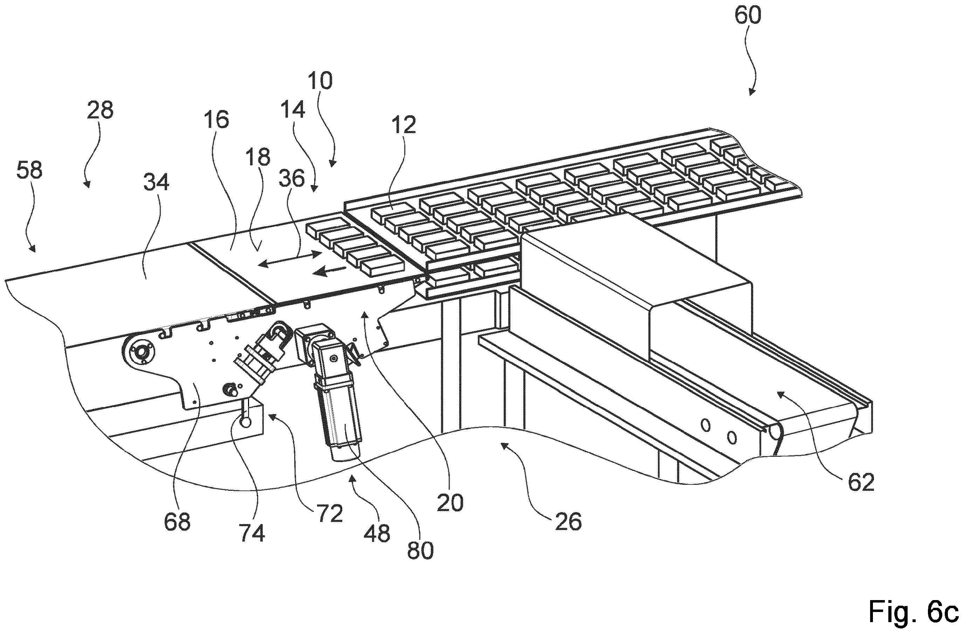

Sollte der Produktstau oder der Störfall wieder weggefallen sein, erfolgt vorzugsweise ein Refeeden - also ein Wiederaufnehmen von Produkten 12 von dem Pufferspeicher 60 und einem anschließenden Übergeben der Produkte 12 an das Austragsförderband 62. Beim Refeeden werden bevorzugt Produkte 12, die auf dem Pufferspeicher 60 angeordnet sind, an die Fördervorrichtung 10, insbesondere an das Transportelement 16, übergeben, wobei der Pufferspeicher 60 in eine dem Transportelement 16 zugewandte Richtung angetrieben wird und das Transportelement 16 in eine dem weiteren Transportelement 34 zugewandte Richtung angetrieben wird (vgl. Pfeil neben Haupttransportrichtung 36 in Figur 6c). Das Transportelement 16 und der Pufferspeicher 60 werden beim Refeeden vorzugsweise im Vergleich zu der bei einer Bestückung des Pufferspeichers 60 erfolgten Bewegungsrichtung des Transportelements 16 und des Pufferspeichers 60 in eine entgegengesetzte Richtung bewegt. Vorzugsweise werden der Pufferspeicher 60 und das Transportelement 16 bei einer Übergabe der Produkte 12 von dem Pufferspeicher 60 an das Transportelement 16 in die entgegengesetzte Richtung bewegt, die dem weiteren Transportelement 34 zugewandt ausgerichtet ist. Das weitere Transportelement 34 kann während des Refeedens weiterhin in Richtung des Transportelements 16 angetrieben werden, bis Produkte 12, die mittels des weiteren Transportelements 34 gefördert werden, in eine Nähe der Fördervorrichtung 10 gelangen. Vorzugsweise erfolgt ein Stoppen einer Bewegung des weiteren Transportelements 34, sobald die Produkte 12, die mittels des weiteren Transportelements 34 während des Refeedens gefördert werden, in die Nähe der Fördervorrichtung 10 gelangen. Es kann eine Überwachungsvorrichtung (hier nicht näher dargestellt), wie beispielsweise eine Lichtschranke, eine Kamera o. dgl., vorgesehen sein, die einen Bereich zwischen der Fördervorrichtung 10 und dem weiteren Transportelement 34 überwacht, um eine Bewegung des weiteren Transportelements 34 während eines Refeedens zu stoppen, insbesondere um eine Kollision von Produkten 12, die einerseits mittels des Transportelements 16 in Richtung des weiteren Transportelements 34 gefördert werden und andererseits mittels des weiteren Transportelements 34 in Richtung des Transportelements 16 gefördert werden.

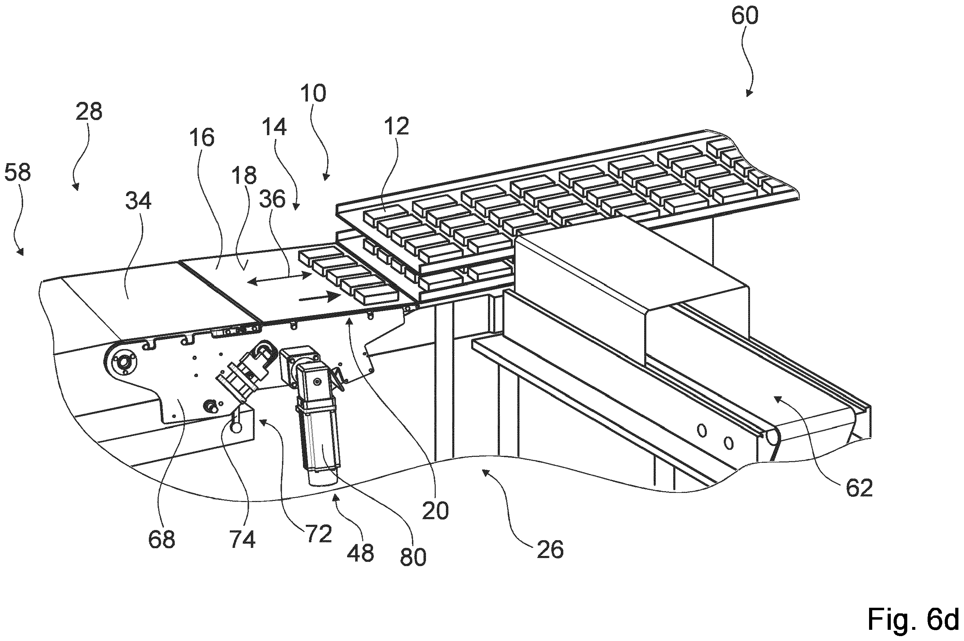

Nachdem die Produkte 12 während eines Refeedens von dem Pufferspeicher 60 an das Transportelement 16 übergeben worden sind, erfolgt eine Schwenk- oder Kippbewegung der Fördervorrichtung 10, insbesondere des Transportelements 16, um die Bewegungsachse 30 der Führungseinheit 20, um die Fördervorrichtung 10, insbesondere die Produktauflagefläche 18, wieder geneigt zur Horizontalebene auszurichten (vgl. Figuren 6c und 6d). Der Umlenkbereich des weiteren Transportelements 34 ist vorzugsweise zusammen mit der Führungseinheit 20 und der Transporteinheit 14 mittels der Lagereinheit 24 relativ zur Rahmeneinheit 26 geschwenkt oder kippt worden, insbesondere relativ zur Horizontalebene geneigt worden, während der weitere Bereich des weiteren Transportelements 34 ungeschwenkt oder ungekippt verbleibt, insbesondere parallel zur Horizontalebene ausgerichtet verbleibt (vgl. angedeutete Knicklinie beim Bezugszeichen 34 in der Figur 6d). Sobald die Schwenk- oder Kippbewegung der Fördervorrichtung 10, insbesondere des Transportelements 16, beendet ist (vgl. Figur 6d), wird das Transportelement 16 in die dem Auftragsförderband 62 zugewandte Richtung angetrieben und die Produkte 12 werden von dem Transportelement 16 an das Auftragsförderband 62 übergeben. Das Transportelement 16 wird in eine vom weiteren Transportelement 34 abgewandte Richtung angetrieben (vgl. Pfeil neben Haupttransportrichtung 36 in Figur 6d). Das weitere Transportelement 34 wird vorzugsweise wieder oder immer noch in die dem Transportelement 16 zugewandte Richtung angetrieben, um die Produkte 12 an das Transportelement 16 zu übergeben, das wiederum die Produkte 12 an das Auftragsförderband 62 übergibt. Figur 6d zeigt den Austragsbetrieb der Produktionsanlage 28, bei dem Produkte 12 dem Austragsförderband 62 zugeführt werden. Das Transportelement 16 ist unabhängig von einer Antriebsrichtung des weiteren Transportelements 34 in zwei entgegengesetzte Richtungen antreibbar. Das Transportelement 16 ist unabhängig von einer Antriebsrichtung des Pufferspeichers 60 in die zwei entgegengesetzten Richtungen antreibbar.

## Patentansprüche

1. Produktionsanlage mit zumindest einer Fördervorrichtung, mit zumindest einer Rahmeneinheit (26), zu der zumindest eine Führungseinheit (20) der Fördervorrichtung zusammen mit einer Transporteinheit (14) der Fördervorrichtung mittels einer Lagereinheit (24) der Fördervorrichtung schwenkbar oder kippbar gelagert ist, und mit zumindest einer weiteren Führungseinheit, wobei die Fördervorrichtung zu einem Fördern von Produkten (12), insbesondere von verpackten und/oder unverpackten Lebensmitteln, zumindest die Transporteinheit (14), die zumindest ein endloses Transportelement (16), insbesondere ein endloses Förderband, umfasst, das eine Produktauflagefläche (18) zu einer Aufnahme von zu fördernden Produkten (12) aufweist, zumindest die Führungseinheit (20) zu einer Führung des Transportelements (16), die zumindest ein, insbesondere beweglich gelagertes, Führungselement (22), insbesondere eine Führungsrolle, zu einer Umlenkung des endlosen Transportelements (16) aufweist, und zumindest die Lagereinheit (24) zu einer schwenkbaren oder kippbaren Lagerung der Führungseinheit (20) zusammen mit der Transporteinheit (14) relativ zur Rahmeneinheit (26) um eine zumindest im Wesentlichen parallel zur Produktauflagefläche (18) verlaufende Bewegungsachse (30) der Führungseinheit (20), umfasst, **dadurch gekennzeichnet, dass** die Führungseinheit (20) zumindest ein weiteres Führungselement (32) zu einer Umlenkung eines endlosen weiteren Transportelements (34) der Produktionsanlage, insbesondere eines endlosen weiteren Förderbands, aufweist, wobei zumindest ein Umlenkbereich des weiteren Transportelements (34) an der Führungseinheit (20) angeordnet ist, wobei ein weiterer Bereich des weiteren Transportelements (34) an der weiteren Führungseinheit gelagert ist, wobei das weitere Führungselement (32) mittels der Lagereinheit (24) zusammen mit dem Führungselement
(22) zur Führung des Transportelements (16) und mit der Transporteinheit (14) relativ zur Rahmeneinheit (26) schwenkbar oder kippbar gelagert ist, während der weitere Bereich des endlosen weiteren Transportelements (34) ungeschwenkt oder ungekippt verbleibt.

2. Produktionsanlage nach Anspruch 1, **dadurch gekennzeichnet, dass** eine zumindest im Wesentlichen parallel zu einer Haupttransportrichtung (36) der Transporteinheit (14) verlaufende, insbesondere entlang einer zumindest im Wesentlichen parallel zur Produktauflagefläche (18) verlaufenden Richtung sich erstreckende, maximale Längserstreckung (38) eines Transportabschnitts (40) des Transportelements (16), der mittels der Lagereinheit (24) schwenkbar oder kippbar ist, kleiner ist als 750 mm.

3. Produktionsanlage nach Anspruch 1 oder 2, **dadurch gekennzeichnet, dass** das zumindest eine weitere Führungselement (32) in einem Nahbereich (42) eines Endes (44) der Führungseinheit (20) angeordnet ist, an dem die Bewegungsachse (30) der Führungseinheit (20) angeordnet ist.

4. Produktionsanlage nach einem der vorhergehenden Ansprüche, **dadurch gekennzeichnet, dass** das zumindest eine weitere Führungselement (32) relativ zur Bewegungsachse (30) der Führungseinheit (20) beabstandet angeordnet ist und einen, insbesondere entlang einer zumindest im Wesentlichen parallel zur Produktauflagefläche (18) verlaufenden Richtung sich erstreckenden, maximalen Abstand (46) zur Bewegungsachse (30) aufweist, der kleiner ist als 400 mm.

5. Produktionsanlage nach einem der vorhergehenden Ansprüche, **gekennzeichnet durch** zumindest eine Antriebseinheit (48), insbesondere eine Elektromotoreinheit, die zumindest ein Antriebselement (50), insbesondere eine Antriebsrolle, zu einem, insbesondere umlaufenden, Antrieb des Transportelements (16) relativ zur, insbesondere um die, Führungseinheit (20) umfasst, wobei zumindest das Antriebselement (50) an der Führungseinheit (20) angeordnet ist und mittels der Lagereinheit (24) zusammen mit der Führungseinheit (20) und der Transporteinheit (14) relativ zur Rahmeneinheit (26) schwenkbar oder kippbar gelagert ist.

6. Produktionsanlage nach einem der vorhergehenden Ansprüche, **gekennzeichnet durch** zumindest eine Antriebseinheit (48), insbesondere eine Elektromotoreinheit, die vollständig an der Führungseinheit (20) angeordnet ist und mittels der Lagereinheit (24) zusammen mit der Führungseinheit (20) und der Transporteinheit (14) relativ zur Rahmeneinheit (26) schwenkbar oder kippbar gelagert ist.

7. Produktionsanlage nach einem der vorhergehenden Ansprüche, **gekennzeichnet durch** zumindest eine Ausrichtungseinheit (52) zu einer Ausrichtung, insbesondere Zentrierung, des Transportelements (16) relativ zur Führungseinheit (20), wobei die Ausrichtungseinheit (52) an der Führungseinheit (20) angeordnet ist und mittels der Lagereinheit (24) zusammen mit der Führungseinheit (20) und der Transporteinheit (14) relativ zur Rahmeneinheit (26) schwenkbar oder kippbar gelagert ist.

8. Produktionsanlage nach einem der vorhergehenden Ansprüche, **gekennzeichnet durch** zumindest eine Abstreifeinheit (54) zu einem Abstreifen von Rückständen am Transportelement (16) von geförderten Produkten (12), wobei die Abstreifeinheit (54) an der Führungseinheit (20) angeordnet ist und mittels der Lagereinheit (24) zusammen mit der Führungseinheit (20) und der Transporteinheit (14) relativ zur Rahmeneinheit (26) schwenkbar oder kippbar gelagert ist.

9. Verfahren zu einem Fördern von Produkten (12), insbesondere von verpackten und/oder unverpackten Lebensmitteln, mittels der Fördervorrichtung der Produktionsanlage nach einem der Ansprüche 1 bis 8, wobei zumindest das Führungselement (22) der Führungseinheit (20) der Fördervorrichtung zusammen mit dem Transportelement (16) der Transporteinheit (14) der Fördervorrichtung relativ zur Rahmeneinheit (26) der Produktionsanlage um eine zumindest im Wesentlichen parallel zu einer Produktauflagefläche (18) verlaufende Bewegungsachse (30) der Führungseinheit (20), geschwenkt oder gekippt wird, **dadurch gekennzeichnet, dass** die Führungseinheit (20) zumindest das weitere Führungselement (32) zu einer Umlenkung, des endlosen weiteren Transportelements (34) aufweist, wobei das weitere Führungselement (32) zusammen mit dem Führungselement (22) und mit der Transporteinheit (14) relativ zur Rahmeneinheit (26) geschwenkt oder gekippt wird, wobei der Umlenkbereich des weiteren Transportelements (34) zusammen mit der Führungseinheit (20) und der Transporteinheit (14) mittels der Lagereinheit (24) relativ zur Rahmeneinheit (26) geschwenkt oder gekippt wird, während der weitere Bereich des weiteren Transportelements (34) ungeschwenkt oder ungekippt verbleibt.

## Claims

1. Production facility comprising at least one conveyor device, at least one frame unit (26), relative to which at least one guide unit (20) of the conveyor device is pivotably or tiltably mounted together with a transport unit (14) of the conveyor device by means of a bearing unit (24) of the conveyor device, and at least one further guide unit, the conveyor device comprising, in order to convey products (12), in particular packaged and/or unpackaged foodstuffs, at least the transport unit (14), which comprises at least one endless transport element (16), in particular an endless conveyor belt, which has a product support surface (18) for receiving products (12) to be conveyed, at least the guide unit (20) for guiding the transport element (16), which guide unit has at least one, in particular movably mounted, guide element (22), in particular a guide roller, for deflecting the endless transport element (16), and at least the bearing unit (24) for pivotably or tiltably mounting the guide unit (20) together with the transport unit (14) relative to the frame unit (26) about a movement axis (30) of the guide unit (20) which runs at least substantially in parallel with the product support surface (18), **characterized in that** the guide unit (20) has at least one further guide element (32) for deflecting an endless further transport element (34) of the production facility, in particular an endless further conveyor belt, at least one deflection region of the further transport element (34) being arranged on the guide unit (20), a further region of the further transport element (34) being mounted on the further guide unit, the further guide element (32) being pivotably or tiltably mounted together with the guide element (22) for guiding the transport element (16) and with the transport unit (14) relative to the frame unit (26) by means of the bearing unit (24), while the further region of the endless further transport element (34) remains unpivoted or untilted.

2. Production facility according to claim 1, **characterized in that** a maximum longitudinal extent (38), running at least substantially in parallel with a main transport direction (36) of the transport unit (14), in particular extending in a direction running at least substantially in parallel with the product support surface (18), of a transport portion (40) of the transport element (16), which can be pivoted or tilted by means of the bearing unit (24), is less than 750 mm.

3. Production facility according to either claim 1 or claim 2,
**characterized in that** the at least one further guide element (32) is arranged in a close region (42) of an end (44) of the guide unit (20) at which the movement axis (30) of the guide unit (20) is arranged.

4. Production facility according to any of the preceding claims,
**characterized in that** the at least one further guide element (32) is arranged at a distance relative to the movement axis (30) of the guide unit (20) and has a maximum distance (46) from the movement axis (30), in particular extending along a direction running at least substantially in parallel with the product support surface (18), that is less than 400 mm.

5. Production facility according to any of the preceding claims,
**characterized by** at least one drive unit (48), in particular an electric motor unit, which comprises at least one drive element (50), in particular a drive roller, for, in particular rotatably, driving the transport element (16) relative to, in particular around, the guide unit (20), at least the drive element (50) being arranged on the guide unit (20) and being pivotably or tiltably mounted together with the guide unit (20) and the transport unit (14) relative to the frame unit (26) by means of the bearing unit (24).

6. Production facility according to any of the preceding claims, **characterized by** at least one drive unit (48), in particular an electric motor unit, which is arranged entirely on the guide unit (20) and is pivotably or tiltably mounted together with the guide unit (20) and the transport unit (14) relative to the frame unit (26) by means of the bearing unit (24).

7. Production facility according to any of the preceding claims, **characterized by** at least one alignment unit (52) for aligning, in particular centering, the transport element (16) relative to the guide unit (20), the alignment unit (52) being arranged on the guide unit (20) and being pivotably or tiltably mounted together with the guide unit (20) and the transport unit (14) relative to the frame unit (26) by means of the bearing unit (24).

8. Production facility according to any of the preceding claims, **characterized by** at least one stripping unit (54) for stripping residues on the transport element (16) from conveyed products (12), the stripping unit (54) being arranged on the guide unit (20) and being pivotably or tiltably mounted together with the guide unit (20) and the transport unit (14) relative to the frame unit (26) by means of the bearing unit (24).

9. Method for conveying products (12), in particular packaged and/or unpackaged foodstuffs, by means of the conveying device of the production facility according to any of claims 1 to 8, at least the guide element (22) of the guide unit (20) of the conveying device being pivoted or tilted together with the transport element (16) of the transport unit (14) of the conveying device relative to the frame unit (26) of the production facility about a movement axis (30) of the guide unit (20) running at least substantially in parallel with a product support surface (18), **characterized in that** the guide unit (20) has at least the further guide element (32) for deflecting the endless further transport element (34), the further guide element (32) being pivoted or tilted together with the guide element (22) and with the transport unit (14) relative to the frame unit (26), the deflection region of the further transport element (34) being pivoted or tilted together with the guide unit (20) and the transport unit (14) relative to the frame unit (26) by means of the bearing unit (24), while the further region of the further transport element (34) remains unpivoted or untilted.

## Revendications

1. Installation de production comportant au moins un dispositif de transport, comportant au moins une unité de cadre (26), par rapport à laquelle au moins une unité de guidage (20) du dispositif de transport est montée de manière à pouvoir pivoter ou basculer conjointement avec une unité de transport (14) du dispositif de transport à l'aide d'une unité de support (24) du dispositif de transport, et comportant au moins une autre unité de guidage, dans laquelle le dispositif de transport comprend, pour un transport de produits (12), en particulier de produits alimentaires emballés et/ou non emballés, au moins l'unité de transport (14), qui comprend au moins un élément de transport (16) sans fin, en particulier une bande transporteuse sans fin, qui présente une surface d'appui de produit (18) pour recevoir des produits (12) à transporter, au moins l'unité de guidage (20) pour un guidage de l'élément de transport (16), qui présente au moins un élément de guidage (22), en particulier logé de manière mobile, en particulier un rouleau de guidage, pour une déviation de l'élément de transport (16) sans fin, et au moins l'unité de support (24) pour un support pivotant ou basculant de l'unité de guidage (20) conjointement avec l'unité de transport (14) par rapport à l'unité de cadre (26) autour d'un axe de déplacement (30) de l'unité de guidage (20) s'étendant au moins sensiblement parallèlement à la surface d'appui de produit (18), **caractérisée en ce que** l'unité de guidage (20) présente au moins un autre élément de guidage (32) pour une déviation d'un autre élément de transport (34) sans fin de l'installation de production, en particulier d'une autre bande transporteuse sans fin, dans laquelle au moins une zone de déviation de l'autre élément de transport (34) est disposée sur l'unité de guidage (20), dans laquelle une autre zone de l'autre élément de transport (34) est montée sur l'autre unité de guidage, dans laquelle l'autre élément de guidage (32) est logé à l'aide de l'unité de support (24) conjointement avec l'élément de guidage (22) pour le guidage de l'élément de transport (16) et avec l'unité de transport (14) de manière à pouvoir pivoter ou basculer par rapport à l'unité de cadre (26), tandis que l'autre zone de l'autre élément de transport (34) sans fin reste non pivotée ou non basculée.

2. Installation de production selon la revendication 1,
**caractérisée en ce qu'**une extension longitudinale maximale (38), s'étendant au moins sensiblement parallèlement à une direction de transport principale (36) de l'unité de transport (14) en particulier le long d'une direction s'étendant au moins sensiblement parallèlement à la surface d'appui de produit (18), d'une section de transport (40) de l'élément de transport (16), qui peut pivoter ou basculer à l'aide de l'unité de support (24), est inférieure à 750 mm.

3. Installation de production selon la revendication 1 ou 2,
**caractérisée en ce que** l'au moins un autre élément de guidage (32) est disposé dans une zone proche (42) d'une extrémité (44) de l'unité de guidage (20), sur laquelle est disposé l'axe de déplacement (30) de l'unité de guidage (20).

4. Installation de production selon l'une des revendications précédentes, **caractérisée en ce que** l'au moins un autre élément de guidage (32) est disposé à distance de l'axe de déplacement (30) de l'unité de guidage (20) et présente une distance maximale (46), par rapport à l'axe de déplacement (30), qui s'étend en particulier le long d'une direction s'étendant au moins sensiblement parallèlement à la surface d'appui de produit (18), qui est inférieure à 400 mm.

5. Installation de production selon l'une des revendications précédentes, **caractérisée par** au moins une unité d'entraînement (48), en particulier une unité de moteur électrique, qui comprend au moins un élément d'entraînement (50), en particulier un rouleau d'entraînement, pour un entraînement, en particulier rotatif, de l'élément de transport (16) par rapport à l'unité de guidage, en particulier autour de l'unité de guidage (20), dans laquelle au moins l'élément d'entraînement (50) est disposé sur l'unité de guidage (20) et est logé à l'aide de l'unité de support (24) de manière à pouvoir pivoter ou basculer par rapport à l'unité de cadre (26) conjointement avec l'unité de guidage (20) et l'unité de transport (14).

6. Installation de production selon l'une des revendications précédentes, **caractérisée par** au moins une unité d'entraînement (48), en particulier une unité de moteur électrique, qui est disposée entièrement sur l'unité de guidage (20) et qui est montée à l'aide de l'unité de support (24) de manière à pouvoir pivoter ou basculer par rapport à l'unité de cadre (26) conjointement avec l'unité de guidage (20) et l'unité de transport (14).

7. Installation de production selon l'une des revendications précédentes, **caractérisée par** au moins une unité d'alignement (52) pour un alignement, en particulier un centrage, de l'élément de transport (16) par rapport à l'unité de guidage (20), dans laquelle l'unité d'alignement (52) est disposée sur l'unité de guidage (20) et est montée à l'aide de l'unité de support (24) de manière à pouvoir pivoter ou basculer par rapport à l'unité de cadre (26) conjointement avec l'unité de guidage (20) et l'unité de transport (14).

8. Installation de production selon l'une des revendications précédentes, **caractérisée par** au moins une unité de raclage (54) pour un raclage de résidus sur l'élément de transport (16) de produits (12) transportés, dans laquelle l'unité de raclage (54) est disposée sur l'unité de guidage (20) et est montée à l'aide de l'unité de support (24) de manière à pouvoir pivoter ou basculer par rapport à l'unité de châssis (26) conjointement avec l'unité de guidage (20) et l'unité de transport (14).

9. Procédé de transport de produits (12), en particulier de produits alimentaires emballés et/ou non emballés, à l'aide du dispositif de transport de l'installation de production selon l'une des revendications 1 à 8, dans lequel au moins l'élément de guidage (22) de l'unité de guidage (20) du dispositif de transport est pivoté ou basculé, conjointement avec l'élément de transport (16) de l'unité de transport (14) du dispositif de transport, par rapport à l'unité de cadre (26) de l'installation de production, autour d'un axe de déplacement (30) de l'unité de guidage (20) s'étendant au moins sensiblement parallèlement à une surface d'appui de produit (18), **caractérisé en ce que** l'unité de guidage (20) présente au moins l'autre élément de guidage (32) pour une déviation de l'autre élément de transport (34) sans fin, dans lequel l'autre élément de guidage (32) est pivoté ou basculé conjointement avec l'élément de guidage (22) et avec l'unité de transport (14) par rapport à l'unité de cadre (26), dans lequel la zone de déviation de l'autre élément de transport (34) est, conjointement avec l'unité de guidage (20) et l'unité de transport (14), pivotée ou basculée par rapport à l'unité de cadre (26) au moyen de l'unité de support (24), tandis que l'autre zone de l'autre élément de transport (34) reste non pivotée ou non basculée.
